# EUROPEAN PATENT SPECIFICATION

(11) **EP 4 499 573 B1**
(45) Date of publication and mention of the grant of the patent: **06.05.2026**
(21) Application number: 23714698.0
(22) Date of filing: 24.03.2023
(51) Int. Cl.: C01D 5/02

(54) **METHODS FOR THE PRODUCTION OF SULFATE SALTS AND FURNACE SUITABLE FOR USE IN THESE METHODS**
VERFAHREN ZUR HERSTELLUNG VON SULFATSALZEN UND ZUR VERWENDUNG FÜR DIESE VERFAHREN GEEIGNETER OFEN
PROCÉDÉS DE PRODUCTION DE SELS DE SULFATE ET FOUR APPROPRIÉ POUR ÊTRE UTILISÉ DANS CES PROCÉDÉS

(30) Priority: 25.03.2022 EP 22164451
(43) Date of publication of application: 05.02.2025
(73) Proprietor: Tessenderlo Group NV, 1050 Brussel (BE)
(72) Inventor: BLOCK, Christophe, 1050 Brussel (BE); LANDUYT, Peter, 1050 Brussel (BE); BELMANS, Marc, 3980 Tessenderlo (BE)
(74) Representative: Nederlandsch Octrooibureau
(86) International application number: PCT/EP2023/057636
(87) International publication number: WO 2023/180526

(56) References cited:
- CN-A- 109 694 260
- CN-U- 201 713 328
- CN-U- 202 542 886
- CN-U- 212 374 898
- CN-U- 215 711 821
- CN-U- 215 855 142

## Description

### Field of the invention

The present invention relates to methods for the production of sulfate salts, in particular potassium sulfate, from sulfuric acid and an alkali metal chloride and/or an alkaline earth metal chloride. The invention further relates to a furnace suitable for use in these methods, and use of the furnace for the production of potassium sulfate, from sulfuric acid and an alkali metal chloride and/or an alkaline earth metal chloride.

### Background of the invention

The Mannheim process is a well-known process for producing sodium sulphate (Na₂SO₄) or potassium sulphate (K₂SO₄). Generally, for potassium sulphate production, the process consists of two steps - an exothermic reaction of potassium chloride and sulfuric acid to potassium bisulphate and hydrogen chloride as a by-product, and an endothermic reaction to potassium sulphate and hydrogen chloride. The steps are shown by reaction formula (1) and (2).

| | | |
|---|---|---|
| KCI + H₂SO₄ → KHSO₄ + HCl | (1) | Exothermic reaction |
| KHSO₄ + KCl → K₂SO₄ + HCl | (2) | Endothermic reaction |

Most volumes of sodium or potassium sulphate produced by the Mannheim process today, still follow substantially the same methodology which developed in Germany during the nineteenth century. The reaction is performed in a furnace comprising two parts, a combustion chamber at the top and a reaction chamber underneath, separated by a dome (a so-called "muffle furnace"). An example of a muffle furnace used for the Mannheim process is described in e.g. patent document US4303619. The dome, constructed from refractory material, separates the combustion chamber and the reaction chamber, preventing flue gases from mixing with the pure hydrogen chloride gas generated in the Mannheim process, but allowing heat transfer from the combustion chamber to the reaction chamber. Potassium chloride and concentrated sulfuric acid are added into the reaction chamber through an inlet (usually a vertical feeding pipe running through the combustion chamber) and the reaction mixture is continuously stirred using rotating rabble arms. Sometimes a multiple-story reactor is used. The HCl gas generated during the production process can be recovered as a highly pure and concentrated, useful and sellable acid product.

Generally, the potassium sulphate obtained from the Mannheim process has moderate chloride content (2% to about 4% by weight). The use of potassium sulphate with high chloride values has become undesirable for the agriculture. Therefore, most of the available prior art is directed to a great extent to producing a lower chloride product while the energy, cost and/or environmental efficiency of the method i.e. the Mannheim process has been neglected.

As indicated in the reaction scheme above, the second step in the reaction is endothermic i.e. heat needs to be foreseen above the reaction chamber. This heat is generally supplied by burning heavy fossil fuel which heats up the combustion chamber by convection and radiation, indirectly heating the reaction chamber by radiation from the refractory dome. The combustion chamber reaches a temperature in the range of from 950°C to 1400°C.

Heating by heavy fuel has a number of significant drawbacks. The flue gases from the combustion chamber contain various environmental pollutants which need to be captured and treated, in particular NOx emissions are a concern. Heating by heavy fuel is also energy inefficient. Because of the high temperature at which the reaction is run, the Mannheim process uses approximately half a barrel of fuel oil per ton of sulfate. Also, due to the especially high temperature and non-uniform heat transfer, a substantial gradient and locally high temperature spots (hot spots) are formed across the combustion chamber's dome surface. This leads to thermal stress and the corrosive conditions encountered are severe, for instance cracks and tears can form which introduce HCl gas into the combustion gases while additional NOₓ is being formed at the hot spots.

The permeated HCl gas requires that the combustion equipment is coated with heat and corrosion resistant concrete. In the reaction room, parts of the equipment are fabricated of cast ferrous metal construction and are designed with thick cross sections. Despite these measures, a frequent replacement of the metal parts is necessary incurring expenses for e.g. maintenance, replacements cost, lost production time.

WO2020/144237A1 describes a method for the production of potassium sulfate in a muffle furnace heated by regenerative burners using natural gas. While this heating method present a significant improvement compared to heavy fuel heated Mannheim processes, it still relies on fossil fuel and has the disadvantage that it does not allow any accurate control of temperature zones.

The present inventors have identified a need for improved Mannheim processes employing improved heating methods, e.g. improved heating methods which are more environmentally friendly, do not rely on fossil fuels, and/or allow a more facile and accurate control of heat distribution and temperature zones.

It is an object of the present invention to provide such improved Mannheim processes. CN 212 374 898 discloses in Fig.2 and description a Mannheim furnace wherein the combustion chamber is on top of the reaction chamber; both chambers share one wall (the upper one for the reaction chamber/lower one for the combustion chamber), so that the heat can be transmitted from one chamber to the other.

### Summary of the invention

In a first aspect of the invention there is provided a method for the production of an alkali metal sulfate and/or an alkaline earth metal sulfate comprising the steps of:
(i) providing sulfuric acid;
(ii) providing an alkali metal chloride and/or an alkaline earth metal chloride;
(iii) reacting the sulfuric acid of step (i) with the alkali metal chloride and/or alkaline earth metal chloride of step (ii) under conditions suitable for at least partially converting the sulfuric acid to alkali metal bisulfate and/or alkaline earth metal bisulfate;
(iv) reacting the alkali metal bisulfate and/or alkaline earth metal bisulfate of step (iii) under conditions suitable for at least partially converting the bisulfate to sulfate, said conditions comprising heating the reaction mixture;

wherein step (iv) is performed in a furnace having a first reaction chamber delimited by one or more reactor walls, each reactor wall having an interior surface facing the first reaction chamber, and an exterior surface opposite to the interior surface;
wherein a major amount of the heat supplied to the reaction mixture of step (iv) originates from one or more electrical resistors which heat the reaction mixture and/or from one or more electrical resistors which heat one or more reactor walls.

As explained throughout this document, the methods of the present invention have several advantages compared to known sulfate salt production methods. For example, they are more energy-efficient and environmentally-friendly than methods relying on fossil fuels, avoiding CO₂ and NOx formation. Since there are no combustion flue gases, formation and removal of hazardous products due to combustion is completely avoided. Electrical energy can be sourced from environmentally friendly sources (renewables) and switching reactors on and off is facilitated such that production capacity can be scaled more flexibly. The methods of the present invention also enable a significantly increased control over heat distribution and temperature profiles within the reaction furnace.

In another aspect of the invention there is provided a furnace comprising a first reaction chamber delimited by a bottom reactor wall, a top reactor wall opposite to the bottom reactor wall, and one or more side reactor walls wherein the furnace comprises one or more electrical resistors placed in a second buffer chamber adjacent to the reaction chamber, wherein the buffer chamber is a closed space delimited by one or more buffer chamber walls, wherein at least one buffer chamber wall is a reactor wall, preferably the top reactor wall, wherein the one or more electrical resistors are placed at a distance from all of the reactor walls such that there is no direct contact between the electrical resistor and the reactor walls and wherein the one or more electrical resistors are placed such that the electrical resistors can heat the exterior surface of one or more reactor walls by radiation.

The placement of the electrical resistors has the advantage that maintenance of the reactor can be performed while the reactor is operational without risk of electrocution of workers. This has the further advantage that there is significantly less exposure to HCl gas compared to when the electrical resistors are placed inside the reaction chamber, such that the operational life of the resistors is increased. This has an even further advantage that heat from the resistors is kept inside the buffer chamber and is optimally used to heat the reaction chamber, while protecting workers from electrocution by the resistors.

The furnace of the present invention also has several advantages compared to known furnaces suitable for sulfate salt production. For example, the furnace is more energy-efficient and environmentally-friendly than furnaces relying on fossil fuels, avoiding CO₂ and NOx formation. Since there are no combustion flue gases, formation and removal of hazardous products due to combustion is completely avoided. Electrical energy can be sourced from environmentally friendly sources (renewables) and switching reactors on and off is facilitated such that production capacity can be scaled more flexibly. The furnace of the present invention also enables a significantly increased control over heat distribution and temperature profiles therewithin.

### Brief description of the drawings

The present invention will be discussed in more detail below, with reference to the attached drawings, in which:
Fig. 1 illustrates a furnace according to the invention;
Fig. 2 illustrates a cross-section of a furnace according to the invention;
Fig. 3 illustrates a furnace according to the invention.

### Detailed description

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound, unless explicitly defined otherwise.

The sulphuric acid provided in step (i) is preferably concentrated sulphuric acid having a concentration of at least 90 wt.%, preferably at least 94 wt.%. Generally, the sulfuric acid concentration is about 98 wt.% or lower.

The alkali metal chloride and/or an alkaline earth metal chloride provided in step (ii) is preferably an alkali metal chloride, more preferably it is selected from sodium and/or potassium chloride, most preferably it is potassium chloride.

The first reaction chamber is preferably delimited by a bottom reactor wall, a top reactor wall opposite to the bottom reactor wall, and one or more side reactor walls.

In some embodiments of the invention at least part, preferably all of the one or more electrical resistors are at least partially embedded in the one or more reactor walls, preferably the top reactor wall. In preferred embodiments of the invention at least part, preferably all of the one or more electrical resistors are fully embedded in the one or more reactor walls, preferably in the top reactor wall, such that no portion of the electrical resistors is exposed to the reaction chamber. In these embodiments, the electrical resistors heat the reactor wall by a combined radiation and conduction heat transfer mechanism, and the reactor wall in turn heats the reaction mixture. Since under the influence of gravity all liquid and solid reagents and reaction products will be located on the bottom reactor wall, by embedding the heating elements in the top reactor wall, contact between the reagents or reaction products (except gaseous HCl) and the heating elements in case of cracks in the reactor wall is avoided.

In highly preferred embodiments of the invention, a major amount of the heat supplied to the reaction mixture of step (iv) originates from one or more electrical resistors which radiate the reaction mixture and/or from one or more electrical resistors which radiate the exterior of one or more reactor walls. The present inventors have found that these radiative heating methods are highly efficient, allow accurate temperature control, allow temperature zones to be installed, and have a highly reduced risk of electrical failure compared to methods significantly relying on conductive heat transfer. Indeed, methods significantly relying on conductive heat transfer by employing electrical resistors which are partially or completely embedded in the reactor wall may suffer from increased resistor failure due to physical strain in view of the different expansion behavior of the reactor wall material and the resistor, as well as are at a greater risk of short-circuiting or electrocuting workers due to unpredictable conduction paths through the reactor wall material or during reactor wall maintenance.

In accordance with preferred embodiments of the invention at least part, preferably all of the one or more electrical resistors are placed at a distance from all of the reactor walls such that there is no direct contact between the electrical resistor and the reactor walls. It will be understood by the skilled person that this results in that a major amount of the heat supplied to the reaction mixture of step (iv) originates from one or more electrical resistors which radiate the reaction mixture and/or from one or more electrical resistors which radiate the exterior of one or more reactor walls as described herein earlier. It is preferred that at least part, preferably all of the one or more electrical resistors are placed at a distance within the range of 1 to 500 mm from the top reactor wall, preferably within the range of 15-200 mm from the top reactor wall, while also being placed at a distance from all of the reactor walls such that there is no direct contact between the electrical resistor and the reactor walls. The distance of the electrical resistor to the reactor wall is determined based on the closest point of the resistor to the reactor wall. By avoiding contact with reactor walls, the risk of short-circuiting or electrocuting workers is minimized, local overheating or hotspots are minimized and the structural integrity of the electrical resistors is optimally maintained as they can independently expand or contract from the reactor.

In some embodiments of the invention, at least part, preferably all of the one or more electrical resistors are placed in the reaction chamber. In such embodiments it is preferred that all of the one or more electrical resistors are placed at a distance from all of the reactor walls such that there is no direct contact between the electrical resistor and the reactor walls; and the first reaction chamber is delimited by a bottom reactor wall, a top reactor wall opposite to the bottom reactor wall, and one or more side reactor walls; and all of the one or more electrical resistors are placed at a distance within the range of 1 to 500 mm from the top reactor wall inside the reaction chamber, preferably within the range of 15-200 mm. An advantage of these embodiments is that a major amount of the heat supplied to the reaction mixture of step (iv) originates from one or more electrical resistors which radiate the reaction mixture, providing optimal energy efficiency. However, since the reactor often requires manual interventions, even while the reactor is operational, there is a large risk of electrocution of workers. There is also an increased deterioration of heating elements due to the HCl gases present in the reaction chamber, such that acid-resistant heating elements need to be used to at least partially compensate for the increased deterioration.

In highly preferred embodiments of the invention, at least part, preferably all of the one or more electrical resistors are placed outside the reaction chamber and radiate the exterior surface of one or more reactor walls. This has the advantage that maintenance of the reactor can be performed while the reactor is operational without risk of electrocution of workers. This has the further advantage that there is significantly less exposure to HCl gas compared to when the electrical resistors are placed inside the reaction chamber, such that the operational life of the resistors is increased. In accordance with the preferred embodiments of the invention described herein earlier, it is preferred that all of the one or more electrical resistors are placed at a distance from all of the reactor walls such that there is no direct contact between the electrical resistor and the reactor walls; and the first reaction chamber is delimited by a bottom reactor wall, a top reactor wall opposite to the bottom reactor wall, and one or more side reactor walls, and all of the one or more electrical resistors are placed at a distance within the range of 1 to 500 mm from the top reactor wall, preferably within the range of 15-200 mm; and all of the one or more electrical resistors are placed outside the reaction chamber and radiate the exterior surface of the top reactor wall. By radiating the top reactor wall, concentric heating zones can be created (as explained herein elsewhere) which result in a different temperature based on reaction progress when moving from the center of the reactor (start of the reaction) to the periphery of the reactor (end of the reaction). When radiating side walls, the only possible temperature profile is an increase in temperature from the center to the outside of the reactor. When radiating the bottom reactor wall a disadvantage is that the heating equipment will be exposed to the solid and liquid reagents as soon as there is a defect in the reactor wall.

The reactors described herein may optionally further comprise floor heating provided by one or more electrical resistors embedded inside the bottom reactor wall. This has the advantage of providing heating close to the reaction mixture, however in case of failure of the bottom reactor wall this will result in the floor heating equipment exposed to the solid and liquid reagents. As is known to the skilled person, such floor heating may also exist without the radiation heating systems of the present invention.

The present inventors have found that it is highly beneficial if the electrical resistors placed outside the reaction chamber are located in a second buffer chamber adjacent to the reaction chamber, wherein the buffer chamber is a closed space delimited by one or more buffer chamber walls. This has the advantage that heat from the resistors is kept inside the buffer chamber and is optimally used to heat the reaction chamber, while protecting workers from electrocution by the resistors. The buffer chamber also allows control of the atmosphere in the buffer chamber as explained herein. The buffer chamber further allows HCl gas migrating through the reactor wall being radiated to be recovered (the reactor wall being radiated will typically be thinner than the other reactor walls and due to its high temperature have an increased porosity and thus HCl gas leakage). In order to allow the electrical resistors to radiate the exterior surface of one or more reactor walls, it is preferred that at least one buffer chamber wall is a reactor wall. Preferably at least one buffer chamber wall is the top reactor wall. As explained herein elsewhere it is preferred to radiate the top reactor wall, so in case the electrical resistors are placed in a buffer chamber, one of the buffer chamber walls needs to correspond to the top reactor wall. It is highly preferred that insulating material, such as ceramic fibers (e.g. aluminum oxide fiber) or glass fibers, are placed between the electrical resistors and the buffer chamber wall which is opposite to the reactor wall being radiated. It is preferred that the one or more resistors are suspended from the top wall of the buffer chamber which is opposite to the top reactor wall. In this way, placement at least part, preferably all of the one or more electrical resistors at a distance within the range of 1 to 500 mm from the top reactor wall, preferably within the range of 15-200 mm from the top reactor wall, while also being placed at a distance from all of the reactor walls such that there is no direct contact between the electrical resistor and the reactor walls, as was described herein earlier, can easily be achieved. It will be understood that alternative ways of mounting the one or more electrical resistors can achieve similar advantages. For example, the electrical resistors may also be suspended between the side walls of the buffer chamber in order to allow placement in the buffer chamber while maintaining a distance from the top reactor wall. The electrical resistors may be placed in a vertical orientation, horizontal orientaton or any orientation therebetween, wherein orientation is determined based on the largest dimension of the resistor.

In preferred embodiments of the invention, the electrical resistors placed outside the reaction chamber are located in a second buffer chamber adjacent to the reaction chamber, wherein the buffer chamber is a closed space delimited by one or more buffer chamber walls and the furnace further comprises a first tube and a second tube, each of which extend from the first reaction chamber through the second buffer chamber, thereby fluidly connecting the interior of the first reaction chamber with the exterior of the second buffer chamber. Preferably, the first tube is connected to an HCl gas transport system suitable for transporting HCl gas generated in the first reaction chamber, and the second tube is provided for dosing one or more reagents to the first reaction chamber. The HCl gas collected from the reaction chamber can be collected as a concentrated solution, e.g. by treatment of the gas stream with aqueous scrubbers, and optionally sold or used in a different process.

The buffer chamber will typically be filled with air. However, it may also be filled with an inert gas, such as nitrogen gas. The present inventors have found that due to migration of HCl gas from the reaction chamber into the buffer chamber (e.g. through pores in the reactor wall) it is preferred that the pressure inside the buffer chamber is higher than the pressure in the reaction chamber and/or that the gas in the buffer chamber is regularly or continuously purged. Purging may be performed such that the HCl concentration in the buffer chamber is maintained below a predetermined level. Preferably the pressure inside the buffer chamber is higher than the pressure in the reaction chamber and the gas in the buffer chamber is regularly or continuously purged such that the HCl concentration in the buffer chamber is maintained below a predetermined level. In preferred embodiments, the HCl-containing gas stream recovered from purging the buffer chamber is fed to the reaction chamber, such that the HCl can be collected. The buffer chamber preferably comprises pressure regulating means which allow the pressure inside the buffer chamber to be decreased and increased. Suitable pressure regulating means are a set of valves, one valve being an outlet valve, another valve being an inlet valve connected to a pressurized gas reservoir, such as a pressurized air or nitrogen gas tank.

The reaction chamber walls are typically multilayer walls. For example, a typical reaction chamber wall comprises a first layer of refractory material facing the interior of the reactor chamber, adjacent to a layer of concrete, adjacent to a layer of bricks. In the preferred embodiments of the invention described herein wherein the one or more electrical resistors radiate the exterior of one or more reactor walls, it is preferred that the reactor wall(s) being radiated (typically and preferably the top reactor wall as described herein) comprises steel or silicon carbide, preferably silicon carbide. The reactor wall being radiated, preferably the top reactor wall, is preferably constructed from a single layer of steel or silicon carbide, preferably silicon carbide. The top reactor wall is preferably constructed in the curved shape of an arch, i.e. a silicon carbide arch. The interior surface of the bottom reactor wall is preferably substantially flat and circular. In this case, the top reactor wall when constructed in the curved shape of an arch is a dome, i.e. a silicon carbide dome. The present heating systems allow the buffer chamber wall opposite to the top reactor wall to be simplified from the traditional refractory dome design, to a simple flat top cover made from e.g. metal, which is typically shielded from heat by insulating material placed between the electrical resistors and the top reactor wall. Thus, it is preferred that the buffer chamber wall opposite to the top reactor wall is constructed substantially flat and circular. Insulating material is preferably placed between the electrical resistors and the buffer chamber wall opposite to the top reactor wall. The insulating material(s) may be sprayed with an emissivity coating, preferably a coating having an emissivity of more than 0.85. The interior surface of the bottom reactor wall is preferably substantially flat and circular with a radius of at least 1 meter, preferably at least 3 meter, more preferably at least 5 meter. The interior surface of the buffer chamber wall opposite to the top reactor wall is preferably circular and preferably has a radius equal to or smaller than the radius of the interior surface of the bottom reactor wall.

Steps (iii) and (iv) can be performed substantially simultaneously in the same reactor by simply providing the reagents of step (i) and (ii) in the first reaction chamber at a molar ratio suitable for reaching the desired conversion of sulfuric acid to sulfate (e.g. at least 2:1 in case the reagent of step (ii) is KCl and a complete conversion to sulfuric acid is desired). This has the advantage that a single reactor suffices for the complete conversion from sulfuric acid to the desired end product. Hence, in some preferred embodiments of the invention, step (iii) and (iv) are performed in the first reaction chamber.

Steps (iii) and (iv) can also be performed separately, such that the sulfuric acid is at least partially converted to bisulfate in step (iii) outside the first reaction chamber, and the resulting reaction mixture comprising bisulfate is fed to the first reaction chamber. This has the advantage that the conversion of sulfuric acid to bisulfate can be performed in a separate reactor operated at lower temperatures, as this conversion does not require the elevated temperatures required by the conversion from bisulfate to sulfate.

In all embodiments of the invention, step (iv) preferably comprises heating the reaction mixture to a temperature of at least 350°C, preferably within the range of 350-700°C, more preferably within the range of 350-600°C.

In general it is preferred that the reagents are provided near the center of the interior surface of the bottom reactor wall, for example within 0.3D of the center of the interior surface of the bottom reactor wall, wherein D is the largest dimension of the interior surface of the bottom reactor wall. In case the interior surface of the bottom reactor wall is substantially flat and circular as explained herein elsewhere, D corresponds to the diameter of the bottom reactor wall. It is furthermore preferred that the reaction mixture of step (iv) is gradually migrated from the center of the interior surface of the bottom reactor wall to the periphery of the interior surface of the bottom reactor wall, for example by rotating rabble arms. The reaction progresses as the reaction mixture moves from the center to the periphery, and the speed of migration of the reaction mixture is preferably set such that the reaction is substantially completed by the time the reaction mixture reaches the periphery of the reaction chamber, where the sulfate reaction product can be collected. For example, if steps (iii) and (iv) are performed substantially simultaneously in the same reactor, it is preferred that the sulfuric acid provided in step (i) and the alkali metal chloride and/or an alkaline earth metal chloride provided in step (ii) are provided near the center of the interior surface of the bottom reactor wall, for example within 0.3D of the center of the interior surface of the bottom reactor wall. For example, if steps (iii) and (iv) are performed separately, it is preferred that the bisulfate of step (iii) is provided near the center of the interior surface of the bottom reactor wall, for example within 0.3D of the center of the interior surface of the bottom reactor wall.

The electrical resistor is an electric heating element which is constructed from a material efficiently converting electrical energy to heat, the electrical resistance of the material causing a heating up of the material and heat transfer from the electrical resistor to the surroundings by radiation, conduction and/or convection, depending on the surroundings of the material. By placing the electrical resistor at a distance from the reactor wall as described herein, the main heat transfer mechanism will be radiative heat transfer. The electrical resistor is typically made from a material selected from the group consisting of precious metals, metallic alloys, ceramics and graphite-carbon materials. Preferably, the electrical resistor is made from a material selected from the group consisting of molybdenum, tungsten, tantalum, graphite, platinum, rhodium, platinum-rhodium alloys, nickel-chrome alloys, iron-chrome-aluminium alloys, silicon carbide, molybdenum disilicide, lanthanum chromite, and zirconium oxide. Molybdenum, tungsten, tantalum and graphite are sensitive to oxidation by air so are mostly suitable in case the resistor is fully embedded in the reactor wall or in case they are operated under an inert atmosphere. In general it is preferred that the resistor is made from platinum, rhodium, platinum-rhodium alloys, nickel-chrome alloys, iron-chrome-aluminium alloys, silicon carbide, molybdenum disilicide, lanthanum chromite, or zirconium oxide, preferably silicon carbide or molybdenum disilicide, most preferably silicon carbide. The electrical resistor is preferably coated, such as with an aluminum(lIl)oxide or silicon dioxide coating, preferably silicon dioxide. The present inventors have subjected a silicon dioxide coated silicon carbide resistor to 1000 °C in an environment rich in HCl gas for two months by mounting into an operational Mannheim furnace used for potassium sulfate production, and no signs of degradation were observed. Hence, in accordance with highly preferred embodiments of the invention the electrical resistor is made from silicon carbide coated with silicon dioxide. This may also be referred to as glazed silicon carbide.

In preferred embodiments of the invention, the resistor is substantially rod-shaped and comprises a hot zone adjacent to a cold zone, the hot zone having an electrical resistance at 1000°C (expressed per mm of resistor length) which is at least 5 times, preferably at least 10 times higher than the electrical resistance of the cold zone at 1000°C. In such a way, the cold zone can be used to attach conductors for power supply to the resistor as well as to provide the resistor with means to attach the resistors to a reactor wall. Hence, in some embodiments of the invention, the resistor comprises a hot zone adjacent to a cold zone, the hot zone having an electrical resistance at 1000°C (expressed per mm of resistor length) which is at least 5 times, preferably at least 10 times higher than the electrical resistance of the cold zone at 1000°C, wherein electrical conductors are attached to the cold zone to provide power to the electrical resistor and preferably comprise means to attach the resistors to a reactor wall. In some embodiments the electrical resistors are attached to the reactor wall by means of the conductors which supply power to the electrical resistor. In other embodiments the electrical resistors are attached to the reactor wall by separate attachment means which are isolated from the electrical conductor, for example by an electrical insulator placed between the attachment means and the electrical conductor. Resistors comprising a hot zone adjacent to a cold zone are known to the skilled person and commercially available (e.g. Starbar^{®} series from Kanthal). These tube-shaped electrical resistors comprise a cold zone formed by cutting two longitudinal slots along the length of the tube and a hot zone formed by cutting a double spiral slot which reduces the cross sectional area through which current flows, resulting in higher resistance than the cold zone. The cold end of the electrical resistor is flame sprayed with aluminum for a short distance to create a metallized area to which aluminum straps are held in compression with a stainless steel clamp (separated from the aluminum with an electrical insulator). Electrical conductors can be attached to the aluminum straps to provide power supply to the electrical resistor.

In preferred embodiments of the invention, the electrical resistor is provided in the form of a ceramic fiber material (such as an insulating blanket or block) comprising the resistor, preferably in the form of a meandering resistor element. Such heating elements are known to the skilled person and commercially available (e.g. Fibrothal^{®} series from Kanthal).

In preferred embodiments of the invention, the electrical resistor is provided in the form of a radiant tube, which is a tube element comprising the resistor. Such heating elements are known to the skilled person and commercially available (e.g. Tubothal^{®} series from Kanthal).

In some embodiments of the invention, in particular when at least part, preferably all of the one or more electrical resistors are placed in the reaction chamber as described herein, acid-resistant electrical conductors are used. An example of a suitable acid-resistant electrical resistor is a higher density silicon carbide electrical resistor having a density of more than 2.8 g/cm³. Such a heating element is commercially available as Starbar^{®}TW from Kanthal.

In accordance with the invention, it is preferred that the heat supplied to the reaction mixture of step (iv) originates from at least 3 electrical resistors, preferably at least 10 electrical resistors, more preferably at least 25 electrical resistors, most preferably at least 30 electrical resistors. A larger number of resistors allows a more accurate control of the temperature distribution in the reaction chamber and allows for more complicated temperature profiles (e.g. from the center of the reaction chamber to the periphery of the reaction chamber) to be installed. Even with as little as three electrical resistors, desirable temperature profiles can be created. For example, in case three meandering resistors laid out in concentric circles are employed, a temperature profile from the center to the periphery of the interior surface of the bottom reactor wall can be created. As will be understood by the skilled person, the number of electrical resistors required to reach the temperatures needed for step (iv) will also increase with increasing reaction chamber size. The exact number of electrical resistors required will depend on the maximum power supply (and thus heating capacity) accepted by each resistor (typically 20-45 kW per resistor), the reaction chamber size, heat loss from the reaction chamber, desired reaction mixture temperature, etc. The present inventors have found that a reaction chamber wherein the interior surface of the bottom reactor wall is substantially flat and circular with a radius of about 6 meter, having a silicon carbide dome-shaped top reactor wall, which top reactor wall is radiated by the electrical resistors on its exterior side from a buffer chamber requires 68-78 silicon carbide electrical resistors operated at about 25-35 kW per element to sufficiently heat the reaction mixture.

The power supply to the one or more electrical resistors may be controlled by conventional controllers known in the art, including simple on-off (static) controllers, phase controllers, variable voltage sources, variable current sources, etc. As used herein, controlling power supply should be interpreted to mean controlling the amount of voltage and/or current supplied to the one or more electrical resistors to supply a controlled amount of power to the one or more electrical resistors in the form of electrical energy, typically expressed in Watt. Preferably the power supply to the one or more electrical resistors is controlled by:
- an on-off (static) controller resulting in a desired average power supply to the electrical resistor;
- a phase controller;
- a thyristor or a triac (such as a silicon controlled rectifier);
- a multiple tap transformer;
- a saturable reactor;
- an induction (voltage) regulator; and/or
- a capacitor.

In the methods of the present invention it is preferred that the furnace further comprises one or more controllers provided to control the power supply to the one or more electrical resistors. It is preferred that the electrical resistors are grouped into at least 2 subgroups, preferably at least 3 subgroups, more preferably at least 4 subgroups, wherein the subgroups are non-overlapping and the one or more controllers are provided for independently controlling the power supply to each subgroup. Non-overlapping means that each electrical resistor only belongs to one subgroup. The subgroups preferably each comprise at least 2, preferably at least 5 electrical resistors. It will be understood by the skilled person that typically a subgroup comprises electrical resistors connected in series or in parallel to the same controller, such that the power supply to a subgroup can be steered by a single controller. For example, in case the electrical resistors are grouped into 3 subgroups, the one or more controllers provided for independently controlling the power supply to each subgroup can be three thyristors or triacs, with each thyristor or triac provided for controlling the power supply of a subgroup. In general, the thyristors or triacs may be used as static controllers or as phase controllers, as is known in the art. Thyristors may be silicon controlled rectifiers (SCR). It will be understood by the skilled person that a single power source (e.g., electrical outlet, energy storage devices such as batteries, generators, alternator, solar power convertors, or any other power supply) may be used to supply power to multiple subgroups. For example, in case the electrical resistors are grouped into 3 subgroups connected in parallel, the one or more controllers provided for independently controlling the power supply to each subgroup can be three multiple tap transformers, with each multiple tap transformer provided for controlling the power supply of a subgroup, thereby providing a predetermined voltage to the subgroups. When using transformers, it will be understood by the skilled person that bridge rectifiers (e.g., SCRs), smoothing capacitors and/or voltage regulators may also be used, preferably for each transformer. The present inventors envisage a setup wherein subgroups are configured digitally such that the group allocation of one or more electrical resistors can be dynamically changed from a first subgroup to a second subgroup by using one or more switches and/or one or more relays, preferably controlled by one or more switch and/or relay controllers (e.g., each switch and/or relay controller controls a respective switch and/or relay; or one switch and/or relay controller controls all switches and/or relays, etc.). The one or more switch and/or relay controllers may control one or more switches to remove or add electrical resistor(s) to a subgroup, thereby configuring the subgroups accordingly. For example, by controlling a switch, connected to an electrical resistor in series, to open, the electrical resistor would be disconnected and removed from a subgroup. The one or more switch and/or relay controllers may control one or more relays to change the grouping of the electrical resistors, thereby configuring the subgroups accordingly. For example, by controlling a relay, a first electrical resistor grouped in a first subgroup would be reconfigured to be grouped in a second group. The one or more switch and/or relay controllers are provided for supplying switching and/or relay signals for the one or more switches and/or one or more relays, respectively.

The methods of the present invention are preferably provided wherein the power supply to a first electrical resistor is different from the power supply to a second electrical resistor. A different power supply means a different amount of power supplied in the form of electrical energy, typically expressed in Watt, for example one electrical resistor's power supply is controlled to provide 20 kW of electrical energy, while another electrical resistor's power supply is controlled to provide 25 kW of electrical energy. In case the electrical resistors are grouped into subgroups as described herein, it is preferred that the power supply to a first electrical resistor in a first subgroup is different from the power supply to a second electrical resistor in a second subgroup. As will be understood by the skilled person in the context of the present disclosure, these methods allow a careful control over the temperature profile inside the reaction chamber, the level of control and granularity of the temperature profile increasing with the number of electrical resistors and the number of independently steered subgroups.

In some embodiments of the invention, the power supply to the first electrical resistor is larger than the power supply to the second electrical resistor, and the number of other electrical resistors located in a sphere of radius R centered on the first electrical resistor is lower than the number of other electrical resistors located in a sphere of radius R centered on the second electrical resistor. This is particularly useful to maintain a uniform temperature in the reaction chamber in case the first electrical resistor is located in a zone with less resistors due to the presence of e.g. an opening in the reactor wall, such as a reagent feeding tube or an inspection port. Hence, in some preferred embodiments of this invention, the first electrical resistor is located closer to an opening in the reactor wall, such as a reagent feeding tube, or inspection port than the second electrical resistor. It is preferred that the first electrical resistor is part of a first subgroup and the second electrical resistor is part of a second subgroup as described herein.

In some embodiments of the invention, the power supply to a first electrical resistor is different from the power supply to a second electrical resistor and the first electrical resistor is closer to the center of the interior surface of the bottom reactor wall than the second electrical resistor. In these embodiments it is preferred that the furnace comprises at least 10 electrical resistors, more preferably at least 25 electrical resistors, most preferably at least 30 electrical resistors and that the first electrical resistor is part of a first subgroup, and the second electrical resistor is part of a second subgroup as described herein.

In particularly preferred embodiments of the invention, the power supply to a first electrical resistor in a first subgroup is different from the power supply to a second electrical resistor in a second subgroup, the first electrical resistor is closer to the center of the interior surface of the bottom reactor wall than the second electrical resistor, the furnace comprises at least 10 electrical resistors, more preferably at least 25 electrical resistors, most preferably at least 30 electrical resistors and at least part, preferably all of the electrical resistors are arranged into 2 or more concentric circles. It is preferred that the first electrical resistor is part of a different concentric circle than the second electrical resistor. Even more preferably, all electrical resistors of a subgroup are part of the same concentric circle.

In some embodiments of the invention, the power supply to a first electrical resistor in a first subgroup is different from the power supply to a second electrical resistor in a second subgroup, the first electrical resistor is closer to the center of the interior surface of the bottom reactor wall than the second electrical resistor, the furnace comprises at least 10 electrical resistors, more preferably at least 25 electrical resistors, most preferably at least 30 electrical resistors and the power supply to the electrical resistors is controlled such that:
a) the temperature of the reaction mixture located on the interior surface of the bottom reactor wall is substantially constant throughout the reactor;
b) the temperature of the reaction mixture located on the interior surface of the bottom reactor wall increases from the center of the interior surface of the bottom reactor wall to the periphery of the interior surface of the bottom reactor wall, preferably increases by at least 50°C, more preferably increases by at least 100°C; or
c) the temperature of the reaction mixture located on the interior surface of the bottom reactor wall decreases from the center of the interior surface of the bottom reactor wall to the periphery of the interior surface of the bottom reactor wall, preferably decreases by at least 50°C, more preferably decreases by at least 100°C.
Option b) is preferred since it was found that an increasing temperature profile from center to periphery of the reaction allows the reaction to reach completion at the periphery while saving energy in the center of the reactor where most reagents have not reacted yet and the driving force for the reaction is largest.
It is particularly preferred that this embodiment is combined with embodiments wherein the reagents are provided near the center of the interior surface of the bottom reactor wall, for example within 0.3D of the center of the interior surface of the bottom reactor wall, wherein D is the largest dimension of the interior surface of the bottom reactor wall and that the reaction mixture of step (iv) is gradually migrated from the center of the interior surface of the bottom reactor wall to the periphery of the interior surface of the bottom reactor wall, for example by rotating rabble arms.

The one or more controllers for controlling the power supply to the one or more electrical resistors may be manually operated, for example in case a worker determines that the reaction temperature is too high or too low, the worker may increase or reduce power supply to one or more resistors, or to one or more subgroups of resistors by adjusting the settings of the one or more controllers. However, it is preferred that the furnace further comprises a processer provided with instructions (e.g., from a memory comprised in the furnace or external thereto) for adjusting the power supply to the one or more electrical resistors by adjusting the settings of the one or more power supply controllers based on measurement data from one or more temperature sensing means. The temperature sensing means will typically be provided for measuring the temperature of one or more reactor walls and/or for measuring the temperature at one or more points inside the first reaction chamber. Furthermore, the processor may also be provided with instructions for configuring the subgroups of one or more electrical resistors by adjusting the settings of the one or more switch and/or relay controllers based on measurement data from one or more temperature sensing means. In preferred embodiments of the invention, the method is provided wherein the one or more electrical resistors are placed outside the reaction chamber and radiate the exterior surface of one or more reactor walls, such as the top reactor wall, preferably the top reactor wall made from silicon carbide, as has been described herein elsewhere, and at least one of the temperature probes is provided for determining the temperature of the top reactor wall.

Generally, the methods of the present invention relate to a continuous industrial process for the production of sulphate salts as described herein. Preferably, the first reaction chamber has a production capacity of about 30 tons per day or more, even more preferably about 35 ton per day or more.

In another aspect of the invention there is provided a furnace comprising a first reaction chamber delimited by a bottom reactor wall, a top reactor wall opposite to the bottom reactor wall, and one or more side reactor walls wherein the furnace comprises one or more electrical resistors placed in a second buffer chamber adjacent to the reaction chamber, wherein the buffer chamber is a closed space delimited by one or more buffer chamber walls, wherein at least one buffer chamber wall is a reactor wall, preferably the top reactor wall, wherein the one or more electrical resistors are placed at a distance from all of the reactor walls such that there is no direct contact between the electrical resistor and the reactor walls and wherein the one or more electrical resistors are placed such that the electrical resistors can heat the exterior surface of one or more reactor walls by radiation. The furnace is suitable for the production of an alkali metal sulfate and/or an alkaline earth metal sulfate from sulfuric acid and an alkali metal chloride and/or an alkaline earth metal chloride.

It is preferred that all of the one or more electrical resistors are placed at a distance within the range of 1 to 500 mm from the top reactor wall, preferably within the range of 15-200 mm. The preferred embodiments relating to the dimension, nature and composition of the reactor walls described herein earlier in the context of the method of the invention equally apply to the furnace of the invention. It is re-emphasized that it is highly preferred that the top reactor wall is constructed from silicon carbide, preferably a single layer of silicon carbide. The distance of the electrical resistor to the reactor wall is determined based on the closest point of the resistor to the reactor wall. By avoiding contact with reactor walls, the risk of short-circuiting or electrocuting workers is minimized, local overheating or hotspots are minimized and the structural integrity of the electrical resistors is optimally maintained as they can independently expand or contract from the reactor.

In these embodiments, the electrical resistors heat the reactor wall by a combined radiation and conduction heat transfer mechanism, and the reactor wall in turn heats the reaction mixture. Since under the influence of gravity all liquid and solid reagents and reaction products will be located on the bottom reactor wall, by embedding the heating elements in the top reactor wall, contact between the reagents or reaction products (except gaseous HCl) and the heating elements in case of cracks in the reactor wall is avoided.

The present inventors have found that these electrical resistors are highly efficient, allow accurate temperature control, allow temperature zones to be installed, and have a highly reduced risk of electrical failure compared to methods significantly relying on conductive heat transfer. Indeed, methods significantly relying on conductive heat transfer by employing electrical resistors which are partially or completely embedded in the reactor wall may suffer from increased resistor failure due to physical strain in view of the different expansion behavior of the reactor wall material and the resistor, as well as are at a greater risk of short-circuiting or electrocuting workers due to unpredictable conduction paths through the reactor wall material or during reactor wall maintenance.

An advantage of these embodiments of the furnace of the invention is that a major amount of the heat supplied to the reaction mixture of the alkali metal bisulfate and/or alkaline earth metal bisulfate originates from one or more electrical resistors which radiate the reaction mixture, providing optimal energy efficiency. However, since the reactor often requires manual interventions, even while the reactor is operational, there is a large risk of electrocution of workers. There is also an increased deterioration of heating elements due to the HCl gases present in the reaction chamber, such that acid-resistant heating elements need to be used to at least partially compensate for the increased deterioration. This has an advantage that maintenance of the reactor can be performed while the reactor is operational without risk of electrocution of workers. This has the further advantage that there is significantly less exposure to HCl gas compared to when the electrical resistors are placed inside the reaction chamber, such that the operational life of the resistors is increased.

By radiating the top reactor wall, concentric heating zones can be created (as explained herein elsewhere) which result in a different temperature based on reaction progress when moving from the center of the reactor (start of the reaction) to the periphery of the reactor (end of the reaction). When radiating side walls, the only possible temperature profile is an increase in temperature from the center to the outside of the reactor. When radiating the bottom reactor wall a disadvantage is that the heating equipment will be exposed to the solid and liquid reagents as soon as there is a defect in the reactor wall.

A further advantage of the furnace of the invention is that heat from the resistors is kept inside the buffer chamber and is optimally used to heat the reaction chamber, while protecting workers from electrocution by the resistors. The buffer chamber further allows HCl gas migrating through the reactor wall being radiated to be recovered (the reactor wall being radiated will typically be thinner than the other reactor walls and due to its high temperature have an increased porosity and thus HCl gas leakage). In order to allow the electrical resistors to radiate the exterior surface of one or more reactor walls, it is preferred that at least one buffer chamber wall is a reactor wall. Preferably at least one buffer chamber wall is the top reactor wall. As explained herein elsewhere it is preferred to radiate the top reactor wall, so in case the electrical resistors are placed in a buffer chamber, one of the buffer chamber walls needs to correspond to the top reactor wall. It is highly preferred that insulating material, such as ceramic fibers, are placed between the electrical resistors and the buffer chamber wall which is opposite to the reactor wall being radiated. It is preferred that the one or more resistors are suspended from the top wall of the buffer chamber which is opposite to the top reactor wall. In this way, placement at least part, preferably all of the one or more electrical resistors at a distance within the range of 1 to 500 mm from the top reactor wall, preferably within the range of 15-200 mm from the top reactor wall, while also being placed at a distance from all of the reactor walls such that there is no direct contact between the electrical resistor and the reactor walls, as was described herein earlier, can easily be achieved.

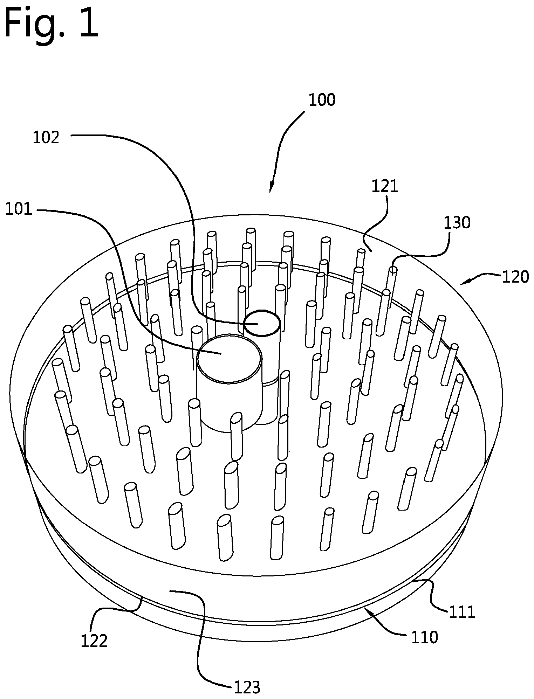

A furnace according to the present invention will be described with reference to Fig. 1. Fig. 1 illustrates a furnace 100 comprising a first reaction chamber 110 delimited by a bottom reactor wall, a top reactor wall opposite to the bottom reactor wall, and one or more side reactor walls 111 wherein the furnace comprises one or more electrical resistors 130 placed in a second buffer chamber 120 adjacent to the reaction chamber, wherein the buffer chamber 120 is a closed space delimited by one or more buffer chamber walls 121, 122, 123, wherein at least one buffer chamber wall is a reactor wall 122, preferably the top reactor wall, wherein the one or more electrical resistors 130 are placed at a distance from all of the reactor walls such that there is no direct contact between the electrical resistor and the reactor walls and wherein the one or more electrical resistors 130 are placed such that the electrical resistors 130 can heat the exterior surface of one or more reactor walls by radiation.

The furnace of the invention, such as the furnace 100 shown in figure 1 preferably comprises a first tube 101 and a second tube 102, each of which extend from the first reaction chamber 110 through the second buffer chamber 120, thereby fluidly connecting the interior of the first reaction chamber 110 with the exterior of the second buffer chamber 120. As shown in Fig. 1, the first tube 101 is provided for dosing the reagent(s) of step (ii), i.e., the alkali metal chloride and/or the alkaline earth metal chloride (e.g., potassium chloride) and the second tube 102 is provided for dosing the reagent of step (i), i.e., the sulfuric acid. A ventilator (not shown) is used in order to stimulate HCl gas recovery via outlets located at the top of the reactor. Preferably, the first tube 101 is connected to an HCl transport system suitable for transporting HCl gas generated in the first reaction chamber 110, and the second tube 102 is provided for dosing one or more reagents to the first reaction chamber 110. The HCl gas collected from the reaction chamber 110 can be collected as a concentrated solution, e.g. by treatment of the gas stream with aqueous scrubbers, and optionally sold or used in a different process.

The preferred embodiments relating to the nature and composition of the electrical resistors described herein earlier in the context of the method of the invention equally apply to the furnace of the invention.

The preferred embodiments relating to the number and lay-out of the electrical resistors described herein earlier in the context of the method of the invention equally apply to the furnace of the invention.

It is highly preferred that the furnace further comprises one or more controllers provided to control the power supply to the one or more electrical resistors. The preferred embodiments relating to the controllers and grouping of the electrical resistors described herein earlier in the context of the method of the invention equally apply to the furnace of the invention.

The buffer chamber 120 will typically be filled with air. However, it may also be filled with an inert gas, such as nitrogen gas. The present inventors have found that due to migration of HCl gas from the reaction chamber into the buffer chamber (e.g. through pores in the reactor wall) it is preferred that the pressure inside the buffer chamber is higher than the pressure in the reaction chamber and/or that the gas in the buffer chamber is regularly or continuously purged. Purging may be performed such that the HCl concentration in the buffer chamber is maintained below a predetermined level. Thus, the buffer chamber preferably comprises pressure regulating means which allow the pressure inside the buffer chamber to be decreased and increased. Suitable pressure regulating means are a set of valves, one valve being an outlet valve, another valve being an inlet valve connected to a pressurized gas reservoir, such as a pressurized air or nitrogen gas tank.

The reaction chamber walls are typically multilayer walls. For example, a typical reaction chamber wall comprises a first layer of refractory material facing the interior of the reactor chamber, adjacent to a layer of concrete, adjacent to a layer of bricks. In the preferred embodiments of the invention described herein wherein the one or more electrical resistors radiate the exterior of one or more reactor walls, it is preferred that the reactor wall(s) being radiated (typically and preferably the top reactor wall as described herein) comprises steel or silicon carbide, preferably silicon carbide. The reactor wall being radiated, preferably the top reactor wall, is preferably constructed from a single layer of steel or silicon carbide, preferably silicon carbide. The top reactor wall is preferably constructed in the curved shape of an arch, i.e. a silicon carbide arch. The present heating systems allow the buffer chamber wall opposite to the top reactor wall to be simplified from the traditional refractory dome design, to a simple flat top cover made from e.g. metal, which is typically shielded from heat by insulating material placed between the electrical resistors and the top reactor wall. Thus, it is preferred that the buffer chamber wall opposite to the top reactor wall is constructed substantially flat and circular. Insulating material is preferably placed between the electrical resistors and the buffer chamber wall opposite to the top reactor wall. The insulating material(s) may be sprayed with an emissivity coating, preferably a coating having an emissivity of more than 0.85. The interior surface of the bottom reactor wall is preferably substantially flat and circular with a radius of at least 1 meter, preferably at least 3 meter, more preferably at least 5 meter. The interior surface of the buffer chamber wall opposite to the top reactor wall is preferably circular and preferably has a radius equal to or smaller than the radius of the interior surface of the bottom reactor wall.

In preferred embodiments, the furnace of the invention is configured to keep the pressure inside the buffer chamber higher than the pressure in the reaction chamber and configured such that the gas in the buffer chamber is regularly or continuously purged such that the HCl concentration in the buffer chamber is maintained below a predetermined level.

In preferred embodiments of the furnace of the invention, the reaction chamber 110 is configured for accommodating a sulfuric acid and accommodating an alkali metal chloride and/or an alkaline earth metal chloride. For example, the reaction chamber is configured to receive the reagents near the center of the interior surface of the bottom reactor wall, for example within 0.3D of the center of the interior surface of the bottom reactor wall, wherein D is the largest dimension of the interior surface of the bottom reactor wall, The furnace is preferably configured for performing the steps (i) and (ii) described herein earlier in the context of the method of the invention in the reaction chamber of the furnace.

In more preferred embodiments of the furnace of the invention, the reaction chamber 110 is configured for reacting 23 the sulfuric acid and the alkali metal chloride and/or the alkaline earth metal chloride under conditions under conditions suitable for at least partially converting the sulfuric acid to alkali metal bisulfate and/or alkaline earth metal bisulfate. Said conditions may comprise heating the reaction mixture by means of the one or more electrical resistors. The embodiments relating to performing the step (iii) described herein earlier in the context of the method of the invention equally apply to performing said step (iii) in the furnace of the invention, particularly int eh reaction chamber of the furnace.

In even more preferred embodiments of the furnace of the invention, the reaction chamber 110 is configured for reacting the sulfuric acid and the alkali metal chloride and/or the alkaline earth metal chloride under conditions suitable for at least partially converting the bisulfate to sulfate, said conditions comprising heating the reaction mixture by means of the one or more electrical resistors. The embodiments relating to performing the step (iv) described herein earlier in the context of the method of the invention equally apply to performing said step (iv) in the furnace of the invention, particularly in the reaction chamber of the furnace.

In all embodiments of the furnace of the invention, the reaction chamber is configured for reacting the sulfuric acid and the alkali metal chloride and/or the alkaline earth metal chloride under conditions preferably comprising heating the reaction mixture to a temperature of at least 350°C, preferably within the range of 350-700°C, more preferably within the range of 350-600°C.

In general it is preferred that the furnace of the invention is configured to receive the reagents in the reaction chamber near the center of the interior surface of the bottom reactor wall, for example within 0.3D of the center of the interior surface of the bottom reactor wall, wherein D is the largest dimension of the interior surface of the bottom reactor wall. In case the interior surface of the bottom reactor wall is substantially flat and circular as explained herein elsewhere, D corresponds to the diameter of the bottom reactor wall. It is furthermore preferred that the furnace of the invention is configured to gradually migrate the reaction mixture of the alkali metal bisulfate and/or the alkaline earth metal bisulfate from the center of the interior surface of the bottom reactor wall to the periphery of the interior surface of the bottom reactor wall, for example by rotating rabble arms. The reaction progresses as the reaction mixture moves from the center to the periphery, and the speed of migration of the reaction mixture is preferably set such that the reaction is substantially completed by the time the reaction mixture reaches the periphery of the reaction chamber, where the sulfate reaction product can be collected.

The electrical resistor 130 is an electric heating element which is constructed from a material efficiently converting electrical energy to heat, the electrical resistance of the material causing a heating up of the material and heat transfer from the electrical resistor to the surroundings by radiation, conduction and/or convection, depending on the surroundings of the material. By placing the electrical resistor at a distance from the reactor wall as described herein, the main heat transfer mechanism will be radiative heat transfer. The electrical resistor is typically made from a material selected from the group consisting of precious metals, metallic alloys, ceramics and graphite-carbon materials. Preferably, the electrical resistor is made from a material selected from the group consisting of molybdenum, tungsten, tantalum, graphite, platinum, rhodium, platinum-rhodium alloys, nickel-chrome alloys, iron-chrome-aluminium alloys, silicon carbide, molybdenum disilicide, lanthanum chromite, and zirconium oxide. Molybdenum, tungsten, tantalum and graphite are sensitive to oxidation by air so are mostly suitable in case the resistor is fully embedded in the reactor wall or in case they are operated under an inert atmosphere. In general it is preferred that the resistor is made from platinum, rhodium, platinum-rhodium alloys, nickel-chrome alloys, iron-chrome-aluminium alloys, silicon carbide, molybdenum disilicide, lanthanum chromite, or zirconium oxide, preferably silicon carbide or molybdenum disilicide, most preferably silicon carbide. The electrical resistor is preferably coated, such as with an aluminum(lIl)oxide or silicon dioxide coating, preferably silicon dioxide. Hence, in accordance with highly preferred embodiments of the invention the electrical resistor is made from silicon carbide coated with silicon dioxide. This may also be referred to a glazed silicon carbide.

In preferred embodiments of the furnace of the invention, the resistor 130 is substantially rod-shaped and comprises a hot zone adjacent to a cold zone, the hot zone having an electrical resistance at 1000°C (expressed per mm of resistor length) which is at least 5 times, preferably at least 10 times higher than the electrical resistance of the cold zone at 1000°C. In such a way, the cold zone can be used to attach conductors for power supply to the resistor as well as to provide the resistor with means to attach the resistors to a reactor wall. Hence, in some embodiments of the invention, the resistor comprises a hot zone adjacent to a cold zone, the hot zone having an electrical resistance at 1000°C (expressed per mm of resistor length) which is at least 5 times, preferably at least 10 times higher than the electrical resistance of the cold zone at 1000°C, wherein electrical conductors are attached to the cold zone to provide power to the electrical resistor and preferably comprise means to attach the resistors to a reactor wall. In some embodiments the electrical resistors are attached to the reactor wall by means of the conductors which supply power to the electrical resistor. In other embodiments the electrical resistors are attached to the reactor wall by separate attachment means which are isolated from the electrical conductor, for example by an electrical insulator placed between the attachment means and the electrical conductor. Resistors comprising a hot zone adjacent to a cold zone are known to the skilled person and commercially available (e.g. Starbar^{®} series from Kanthal). These tube-shaped electrical resistors comprise a cold zone formed by cutting two longitudinal slots along the length of the tube and a hot zone formed by cutting a double spiral slot which reduces the cross sectional area through which current flows, resulting in higher resistance than the cold zone. The cold end of the electrical resistor is flame sprayed with aluminum for a short distance to create a metallized area to which aluminum straps are held in compression with a stainless steel clamp (separated from the aluminum with an electrical insulator). Electrical conductors can be attached to the aluminum straps to provide power supply to the electrical resistor.

In preferred embodiments of the invention, the electrical resistor is provided in the form of a radiant tube, which is a tube element comprising the resistor. Such heating elements are known to the skilled person and commercially available (e.g. Tubothal^{®} series from Kanthal).

In preferred embodiments of the invention, the electrical resistor is provided in the form of a ceramic fiber material (such as an insulating blanket or block) comprising the resistor, preferably in the form of a meandering resistor element. Such heating elements are known to the skilled person and commercially available (e.g. Fibrothal^{®} series from Kanthal).

In some embodiments of the invention, in particular when at least part, preferably all of the one or more electrical resistors 130 are placed in the reaction chamber as described herein, acid-resistant electrical conductors are used. An example of a suitable acid-resistant electrical resistor is a higher density silicon carbide electrical resistor having a density of more than 2.8 g/cm³. Such a heating element is commercially available as Starbar^{®}TW from Kanthal.

In accordance with the invention, it is preferred that the furnace comprises at least 3 electrical resistors, preferably at least 10 electrical resistors, more preferably at least 25 electrical resistors, most preferably at least 30 electrical resistors. A larger number of resistors allows a more accurate control of the temperature distribution in the reaction chamber and allows for more complicated temperature profiles (e.g. from the center of the reaction chamber to the periphery of the reaction chamber) to be installed. Even with as little as three electrical resistors, desirable temperature profiles can be created. For example, in case three meandering resistors laid out in concentric circles are employed, a temperature profile from the center to the periphery of the interior surface of the bottom reactor wall can be created. As will be understood by the skilled person, the number of electrical resistors required to reach the temperatures needed for reacting the alkali metal bisulfate and/or alkaline earth metal bisulfate will also increase with increasing reaction chamber size. The exact number of electrical resistors required will depend on the maximum power supply (and thus heating capacity) accepted by each resistor (typically 20-45 kW per resistor), the reaction chamber size, heat loss from the reaction chamber, desired reaction mixture temperature, etc. The present inventors have found that a reaction chamber wherein the interior surface of the bottom reactor wall is substantially flat and circular with a radius of about 6 meter, having a silicon carbide dome-shaped top reactor wall, which top reactor wall is radiated by the electrical resistors on its exterior side from a buffer chamber requires 68-78 silicon carbide electrical resistors operated at about 25-35 kW per element to sufficiently heat the reaction mixture.

The power supply to the one or more electrical resistors may be controlled by conventional controllers known in the art, including simple on-off (static) controllers, phase controllers, variable voltage sources, variable current sources, etc. As used herein, controlling power supply should be interpreted to mean controlling the amount of voltage and/or current supplied to the one or more electrical resistors to supply a controlled amount of power to the one or more electrical resistors in the form of electrical energy, typically expressed in Watt. Preferably the power supply to the one or more electrical resistors is controlled by at least one of:
- an on-off (static) controller resulting in a desired average power supply to the electrical resistor;
- a phase controller;
- a thyristor or a triac (such as a silicon controlled rectifier);
- a multiple tap transformer;
- a saturable reactor;
- an induction (voltage) regulator; and/or
- a capacitor.

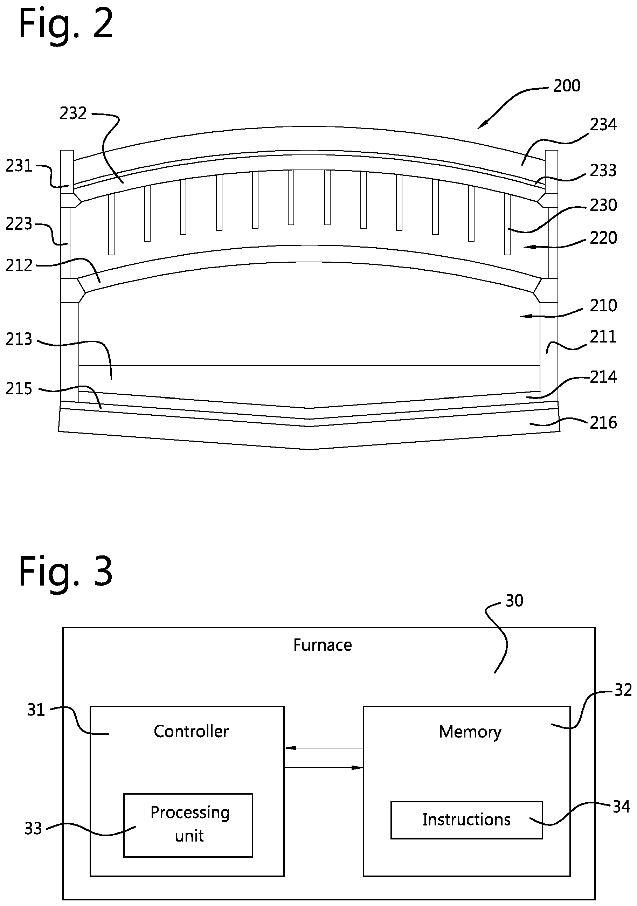

A furnace according to the present invention will be described with reference to Fig. 2. Fig. 2 illustrates a cross-section of a furnace 200 which corresponds in many aspects and/or features to the furnace 100 of Fig. 1.

The furnace 200 in Fig. 2 comprises a first reaction chamber 210 delimited by a bottom reactor wall, a top reactor wall 212 opposite to the bottom reactor wall, and one or more side reactor walls 211 wherein the furnace comprises one or more electrical resistors 230 placed in a second buffer chamber 220 adjacent to the reaction chamber, wherein the buffer chamber 220 is a closed space delimited by one or more buffer chamber walls 223, wherein the bottom buffer chamber wall is the top reactor wall 212, wherein the one or more electrical resistors 230 are placed at a distance from all of the reactor walls such that there is no direct contact between the electrical resistor 230 and the reactor walls and wherein the one or more electrical resistors 230 are placed such that the electrical resistors 230 can heat the exterior surface of one or more reactor walls by radiation.

With reference to the reaction chamber 210 shown in Fig. 2, the top reactor wall 212 is constructed in the curved shape of an arch, as described herein. With reference to the buffer chamber 220 shown in Fig. 2, the buffer chamber comprises one or more buffer chamber side walls 223, a buffer chamber top wall, and a buffer chamber bottom wall. The buffer chamber bottom wall is the top reactor wall 212. The buffer chamber top wall opposite the buffer chamber bottom wall comprises a first top buffer chamber wall layer 234 made out of insulating concrete and having an outer surface to the surrounding of the furnace 200 (e.g., air), a second top buffer chamber wall layer 232 made out of insulating stone blocks, and an intermediate top buffer chamber wall layer 233 placed between the first buffer chamber wall layer 234 and the second buffer chamber wall layer 232. The intermediate buffer chamber wall layer 233 is made out of ceramic fibre insulation material. The first top buffer chamber wall layer 234 is supported by brick sidewalls 231.

As described herein, the electrical resistors 230 generate heat which is transferred to the top reactor wall by radiation heat transfer. The buffer chamber top wall conducts some of the heat transferred thereto to the surrounding of the furnace 200 from the buffer chamber 220 as heat loss. Insulating material used for the top buffer camber wall as well as the orientation of the resistors can be used to minimize heat loss. The top reactor wall transfers heat from the buffer chamber 220 to the reaction chamber 210.

In the reactor of Fig. 2, the reactor side wall(s) 211 and the buffer chamber side wall(s) 223 are made of bricks.

A furnace according to the present invention equipped with a controller will be further described with reference to Fig. 3. Fig. 3 illustrates a furnace 30 comprising a controller 31 and a memory 32, wherein the controller 31 includes a processor 33 and the memory 32 includes instructions 34.

In embodiments, the furnace 30 comprises one or more controllers 31 each including a processing unit 33. The furnace 30 further comprises a memory 32 comprising instructions 34 which, when executed by the processing unit 33 of the controller 34, cause the furnace to execute particular steps of controlling the power supply to the one or more electrical resistors 130, as described herein. Each processing unit 33 may additionally or alternatively comprise the instructions 34.

In alternative embodiments, the furnace 30 comprises one or more controllers 31, a processing unit 33 and a memory 32 comprising instructions 34 which, when executed by the processor unit 33, cause the furnace to execute particular steps of controlling the power supply to the one or more electrical resistors 130, as described herein. The processor unit 33 may additionally or alternatively comprise the instructions 34.

In preferred embodiments of the furnace described herein, the electrical resistors 130 are grouped into at least 2 subgroups, preferably at least 3 subgroups, more preferably at least 4 subgroups, wherein the subgroups are non-overlapping and the one or more controllers are provided for independently controlling the power supply to each subgroup. Non-overlapping means that each electrical resistor only belongs to one subgroup. The subgroups preferably each comprise at least 2, preferably at least 5 electrical resistors. It will be understood by the skilled person that typically a subgroup comprises electrical resistors connected in series or in parallel to the same controller, such that the power supply to a subgroup can be steered by a single controller. For example, in case the electrical resistors are grouped into 3 subgroups, the one or more controllers provided for independently controlling the power supply to each subgroup can be three thyristors or triacs, with each thyristor or triac provided for controlling the power supply of a subgroup. In general, the thyristors or triacs may be used as static controllers or as phase controllers, as is known in the art. Thyristors may be silicon controlled rectifiers (SCR). It will be understood by the skilled person that a single power source (e.g., electrical outlet, energy storage devices such as batteries, generators, alternator, solar power convertors, or any other power supply) may be used to supply power to multiple subgroups. For example, in case the electrical resistors are grouped into 3 subgroups connected in parallel, the one or more controllers provided for independently controlling the power supply to each subgroup can be three multiple tap transformers, with each multiple tap transformer provided for controlling the power supply of a subgroup, thereby providing a predetermined voltage to the subgroups. When using transformers, it will be understood by the skilled person that bridge rectifiers (e.g., SCRs), smoothing capacitors and/or voltage regulators may also be used, preferably for each transformer. The present inventors also envisage a setup wherein subgroups are configured digitally such that the group allocation of one or more electrical resistors can be dynamically changed from a first subgroup to a second subgroup by using one or more switches and/or one or more relays, preferably controlled by one or more switch and/or relay controllers (e.g., each switch and/or relay controller controls a respective switch and/or relay; or one switch and/or relay controller controls all switches and/or relays, etc.). The one or more switch and/or relay controllers may control one or more switches to remove or add electrical resistor(s) to a subgroup, thereby configuring the subgroups accordingly. For example, by controlling a switch, connected to an electrical resistor in series, to open, the electrical resistor would be disconnected and removed from a subgroup. The one or more switch and/or relay controllers may control one or more relays to change the grouping of the electrical resistors, thereby configuring the subgroups accordingly. For example, by controlling a relay, a first electrical resistor grouped in a first subgroup would be reconfigured to be grouped in a second group. The one or more switch and/or relay controllers are provided for supplying switching and/or relay signals for the one or more switches and/or one or more relays, respectively.

The furnace of the present invention is preferably provided wherein the power supply to a first electrical resistor is different from the power supply to a second electrical resistor. A different power supply means a different amount of power supplied in the form of electrical energy, typically expressed in Watt, for example one electrical resistor's power supply is controlled to provide 20 kW of electrical energy, while another electrical resistor's power supply is controlled to provide 25 kW of electrical energy. In case the electrical resistors are grouped into subgroups as described herein, it is preferred that the power supply to a first electrical resistor in a first subgroup is different from the power supply to a second electrical resistor in a second subgroup. As will be understood by the skilled person in the context of the present disclosure, these furnaces allow a careful control over the temperature profile inside the reaction chamber, the level of control and granularity of the temperature profile increasing with the number of electrical resistors and the number of independently steered subgroups.

In some embodiments of the furnaces of the invention, the furnace is configured such that during operation the power supply to the first electrical resistor is larger than the power supply to the second electrical resistor, and the number of other electrical resistors located in a sphere of radius R centered on the first electrical resistor is lower than the number of other electrical resistors located in a sphere of radius R centered on the second electrical resistor. This is particularly useful to maintain a uniform temperature in the reaction chamber in case the first electrical resistor is located in a zone with less resistors due to the presence of e.g. an opening in the reactor wall, such as a reagent feeding tube or an inspection port. Hence, in some preferred embodiments of this invention, the first electrical resistor is located closer to an opening in the reactor wall, such as a reagent feeding tube, or inspection port than the second electrical resistor. It is preferred that the first electrical resistor is part of a first subgroup and the second electrical resistor is part of a second subgroup as described herein.

In some embodiments of the invention, the furnace is configured such that during operation the power supply to a first electrical resistor is different from the power supply to a second electrical resistor and the first electrical resistor is closer to the center of the interior surface of the bottom reactor wall than the second electrical resistor. In these embodiments it is preferred that the furnace comprises at least 10 electrical resistors, more preferably at least 25 electrical resistors, most preferably at least 30 electrical resistors and that the first electrical resistor is part of a first subgroup, and the second electrical resistor is part of a second subgroup as described herein.

In particularly preferred embodiments of the invention, the furnace is configured such that during operation the power supply to a first electrical resistor in a first subgroup is different from the power supply to a second electrical resistor in a second subgroup, the first electrical resistor is closer to the center of the interior surface of the bottom reactor wall than the second electrical resistor, the furnace comprises at least 10 electrical resistors, more preferably at least 25 electrical resistors, most preferably at least 30 electrical resistors and at least part, preferably all of the electrical resistors are arranged into 2 or more concentric circles. It is preferred that the first electrical resistor is part of a different concentric circle than the second electrical resistor. Even more preferably, all electrical resistors of a subgroup are part of the same concentric circle.

In some embodiments of the invention, the furnace is configured such that during operation the power supply to a first electrical resistor in a first subgroup is different from the power supply to a second electrical resistor in a second subgroup, the first electrical resistor is closer to the center of the interior surface of the bottom reactor wall than the second electrical resistor, the furnace comprises at least 10 electrical resistors, more preferably at least 25 electrical resistors, most preferably at least 30 electrical resistors and the furnace is configured such that during operation the power supply to the electrical resistors is controlled such that:
a) the temperature of the reaction mixture located on the interior surface of the bottom reactor wall is substantially constant throughout the reactor;
b) the temperature of the reaction mixture located on the interior surface of the bottom reactor wall increases from the center of the interior surface of the bottom reactor wall to the periphery of the interior surface of the bottom reactor wall, preferably increases by at least 50°C, more preferably increases by at least 100°C; or
c) the temperature of the reaction mixture located on the interior surface of the bottom reactor wall decreases from the center of the interior surface of the bottom reactor wall to the periphery of the interior surface of the bottom reactor wall, preferably decreases by at least 50°C, more preferably decreases by at least 100°C.
Option b) is preferred since it was found that an increasing temperature profile from center to periphery of the reaction allows the reaction to reach completion at the periphery while saving energy in the center of the reactor where most reagents have not reacted yet and the driving force for the reaction is largest.
It is particularly preferred that this embodiment is combined with embodiments wherein the furnace is configured such that reagents are received near the center of the interior surface of the bottom reactor wall, for example within 0.3D of the center of the interior surface of the bottom reactor wall, wherein D is the largest dimension of the interior surface of the bottom reactor wall and that the reaction mixture of the alkali metal bisulfate and/or alkaline earth metal bisulfate is gradually migrated from the center of the interior surface of the bottom reactor wall to the periphery of the interior surface of the bottom reactor wall, for example by rotating rabble arms.

The one or more controllers for controlling the power supply to the one or more electrical resistors may be configured to be manually operated, for example in case a worker determines that the reaction temperature is too high or too low, the worker may increase or reduce power supply to one or more resistors, or to one or more subgroups of resistors by adjusting the settings of the one or more controllers. However, it is preferred that the furnace further comprises a processer provided with instructions (e.g., from a memory comprised in the furnace or external thereto) for adjusting the power supply to the one or more electrical resistors by adjusting the settings of the one or more power supply controllers based on measurement data from one or more temperature sensing means. The temperature sensing means will typically be provided for measuring the temperature of one or more reactor walls and/or for measuring the temperature at one or more points inside the first reaction chamber. Furthermore, the processor may also be provided with instructions for configuring the subgroups of one or more electrical resistors by adjusting the settings of the one or more switch and/or relay controllers based on measurement data from one or more temperature sensing means. In preferred embodiments of the invention, the furnace of the invention is provided wherein the one or more electrical resistors are placed outside the reaction chamber and radiate the exterior surface of one or more reactor walls, such as the top reactor wall, preferably the top reactor wall made from silicon carbide, as has been described herein elsewhere, and the furnace comprises at least one temperature probe is provided for determining the temperature of the top reactor wall.

Generally, the furnace of the present invention is suitable for a continuous industrial process for the production of sulphate salts as described herein. Preferably, the first reaction chamber has a production capacity of about 30 tons per day or more, even more preferably about 35 ton per day or more.

In another aspect of the invention there is provided a processing unit configured to steer the controllers described herein, for performing the method according to the invention. Said controllers are provided to control the power supply to the one or more electrical resistors as described herein earlier in various embodiments. The preferred embodiments relating to the controllers and grouping of the electrical resistors described herein earlier in the context of the method of the invention equally apply to the processing unit of the invention.

In another aspect of the invention there is provided a controller comprising the processing unit of the invention.

In another aspect of the invention there is provided the use of a furnace for the production of an alkali metal sulfate and/or an alkaline earth metal sulfate from sulfuric acid and an alkali metal chloride and/or an alkaline earth metal chloride, wherein the furnace has a first reaction chamber delimited by one or more reactor walls, each reactor wall having an interior surface facing the first reaction chamber, and an exterior surface opposite to the interior surface; wherein the furnace comprises one or more electrical resistors configured to heat the reaction mixture and/or comprises one or more electrical resistors configured to heat one or more reactor walls. The one or more electrical resistors are preferably configured to heat the reaction mixture and/or the exterior of one or more reactor walls by radiation. It is further preferred that at least part, preferably all of the one or more electrical resistors are placed at a distance from all of the reactor walls such that there is no direct contact between the electrical resistor and the reactor walls. It is preferred that at least part, preferably all of the one or more electrical resistors are placed outside the reaction chamber and radiate the exterior surface of one or more reactor walls.

The furnace is preferably a furnace as is described herein in detail. Thus, in another aspect of the invention, there is provided the use of the furnace described herein for the production of an alkali metal sulfate and/or an alkaline earth metal sulfate from sulfuric acid and an alkali metal chloride and/or an alkaline earth metal chloride. The use preferably comprises heating the exterior of one or more reactor walls by radiation from the one or more electrical resistors. The preferred embodiments relating to furnace described herein earlier equally apply to use of said furnace of the invention for the production of an alkali metal sulfate and/or an alkaline earth metal sulfate.

In preferred embodiments there is provided the use of the furnace described herein for the production of an alkali metal sulfate and/or an alkaline earth metal sulfate from sulfuric acid and an alkali metal chloride and/or an alkaline earth metal chloride wherein the use comprises:
(i) providing sulfuric acid;
(ii) providing an alkali metal chloride and/or an alkaline earth metal chloride;
(iii) reacting the sulfuric acid of step (i) with the alkali metal chloride and/or alkaline earth metal chloride of step (ii) under conditions suitable for at least partially converting the sulfuric acid to alkali metal bisulfate and/or alkaline earth metal bisulfate;
(iv) reacting the alkali metal bisulfate and/or alkaline earth metal bisulfate of step (iii) under conditions suitable for at least partially converting the bisulfate to sulfate, said conditions comprising heating the reaction mixture;
wherein step (iv) is performed in the furnace described herein.

The preferred embodiments relating to method described herein earlier equally apply to use of the furnace of the invention for the production of an alkali metal sulfate and/or an alkaline earth metal sulfate. For example, the method of controlling the power supply to multiple resistors or subgroups of resistors described herein earlier in the context of the method, are equally applicable to the use of the furnace of the invention.

### Examples

### Example 1:

A pilot-scale cylindrical refractory concrete reactor having an interior diameter of 1 meter was fitted with a silicon carbide dome, above which three Fibrothal^{®} series resistors from Kanthal, each having a meandering resistor attached to a mineral fiber insulation panel were suspended. The concrete reactor was enveloped by a layer of insulation and placed inside a stainless steel vessel. The spacing between the resistors and the silicon carbide dome was 5 cm. The buffer chamber where the resistors were located was closed with a stainless steel lid and kept under a continuous nitrogen gas purge at slightly increased pressure. Each resistor accepts a maximum power supply of 11 kW. Three temperature probes were fitted in the reaction chamber and the power supply to the resistors could be individually controlled by means of a thyristor control based on the temperature probe data. The power supply was controlled such as to reach a reaction chamber temperature of 550 °C. Reagents were loaded via a reagent loading tube located in the center of the reactor, and the reaction mixture was stirred with four rotating rabble arms which migrate the reaction mixture from the center to the periphery of the reactor, where it was recovered via an outlet at the reactor floor level. The oven was operated under slightly reduced pressure (- 1-5 mbar) using a ventilator in order to stimulate HCl gas recovery via outlets located at the top of the reactor. Successful production of potassium sulfate was achieved.

## Claims

1. A furnace suitable for the production of an alkali metal sulfate and/or an alkaline earth metal sulfate from sulfuric acid and an alkali metal chloride and/or an alkaline earth metal chloride, the furnace comprising a first reaction chamber delimited by a bottom reactor wall, a top reactor wall opposite to the bottom reactor wall, and one or more side reactor walls,
wherein the furnace comprises one or more electrical resistors placed in a second buffer chamber adjacent to the reaction chamber,
wherein the buffer chamber is a closed space delimited by one or more buffer chamber walls, wherein at least one buffer chamber wall is a reactor wall, preferably the top reactor wall,
wherein the one or more electrical resistors are placed at a distance from all of the reactor walls such that there is no direct contact between the electrical resistor and the reactor walls, and
wherein the one or more electrical resistors are placed such that the electrical resistors can heat the exterior surface of one or more reactor walls by radiation,
preferably wherein the one or more electrical resistors are placed at a distance within the range of 1 to 500 mm from the top reactor wall, more preferably within the range of 15-200 mm.

2. The furnace of claim 1, comprising at least 3 electrical resistors, preferably at least 10 electrical resistors, more preferably at least 25 electrical resistors, most preferably at least 30 electrical resistors.

3. The furnace of claim 2, wherein the electrical resistors are grouped into at least 2 subgroups, preferably at least 3 subgroups, wherein the subgroups are non-overlapping and the furnace further comprises one or more controllers provided for independently controlling the power supply to each subgroup, and,
preferably wherein the controllers are configured to control the power supply such that the power supply to a first electrical resistor in a first subgroup is different from the power supply to a second electrical resistor in a second subgroup.

4. The furnace of claim 3, wherein the controllers are configured to control the power supply such that the power supply to a first electrical resistor in a first subgroup is different from the power supply to a second electrical resistor in a second subgroup, and preferably wherein the controllers are configured to control the power supply such that the power supply to the first electrical resistor is larger than the power supply to the second electrical resistor, and wherein the number of other electrical resistors located in a sphere of radius R centered on the first electrical resistor is lower than the number of other electrical resistors located in a sphere of radius R centered on the second electrical resistor,

5. The furnace of claim 4, wherein the furnace comprises at least 10 electrical resistors, preferably at least 25 electrical resistors, more preferably at least 30 electrical resistors, wherein the first electrical resistor is closer to the center of the interior surface of the bottom reactor wall than the second electrical resistor,
preferably wherein at least part, and more preferably all of the electrical resistors are arranged into 2 or more concentric circles, and wherein the first electrical resistor is part of a different concentric circle than the second electrical resistor.

6. The furnace of claim 5, wherein the reaction chamber is configured to receive the reagents near the center of the interior surface of the bottom reactor wall, for example within 0.3D of the center of the interior surface of the bottom reactor wall, wherein D is the largest dimension of the interior surface of the bottom reactor wall, and wherein the furnace is configured to gradually migrate the reaction mixture from the center of the interior surface of the bottom reactor wall to the periphery of the interior surface of the bottom reactor wall, for example by rotating rabble arms, and wherein the controllers are configured to control the power supply such that during operation:
the temperature of the reaction mixture located on the interior surface of the bottom reactor wall is substantially constant throughout the reactor;
the temperature of the reaction mixture located on the interior surface of the bottom reactor wall increases from the center of the interior surface of the bottom reactor wall to the periphery of the interior surface of the bottom reactor wall, preferably increases by at least 50°C, more preferably increases by at least 100°C; or
the temperature of the reaction mixture located on the interior surface of the bottom reactor wall decreases from the center of the interior surface of the bottom reactor wall to the periphery of the interior surface of the bottom reactor wall, preferably decreases by at least 50°C, more preferably decreases by at least 100°C.

7. A method for the production of an alkali metal sulfate and/or an alkaline earth metal sulfate comprising the steps of:
(i) providing sulfuric acid;
(ii) providing an alkali metal chloride and/or an alkaline earth metal chloride, preferably an alkali metal chloride;
(iii) reacting the sulfuric acid of step (i) with the alkali metal chloride and/or alkaline earth metal chloride of step (ii) under conditions suitable for at least partially converting the sulfuric acid to alkali metal bisulfate and/or alkaline earth metal bisulfate;
(iv) reacting the alkali metal bisulfate and/or alkaline earth metal bisulfate of step (iii) under conditions suitable for at least partially converting the bisulfate to sulfate, said conditions comprising heating the reaction mixture;
wherein step (iv) is performed in a furnace having a first reaction chamber delimited by one or more reactor walls, each reactor wall having an interior surface facing the first reaction chamber, and an exterior surface opposite to the interior surface;
wherein a major amount of the heat supplied to the reaction mixture of step (iv) originates from one or more electrical resistors which heat the reaction mixture and/or from one or more electrical resistors which heat one or more reactor walls,
preferably wherein a major amount of the heat supplied to the reaction mixture of step (iv) originates from one or more electrical resistors which radiate the reaction mixture and/or from one or more electrical resistors which radiate the exterior of one or more reactor walls;
more preferably wherein at least part, even more preferably all of the one or more electrical resistors are placed at a distance from all of the reactor walls such that there is no direct contact between the electrical resistor and the reactor walls; and,
most preferably all of the one or more electrical resistors are placed outside the reaction chamber and radiate the exterior surface of one or more reactor walls.,

8. The method of claim 7, wherein the first reaction chamber is delimited by a bottom reactor wall, a top reactor wall opposite to the bottom reactor wall, and one or more side reactor walls, and at least part, preferably all of the one or more electrical resistors are placed at a distance within the range of 1 to 500 mm from the top reactor wall, preferably within the range of 15-200 mm;
more preferably wherein the electrical resistors placed outside the reaction chamber are located in a second buffer chamber adjacent to the reaction chamber, wherein the buffer chamber is a closed space delimited by one or more buffer chamber walls and wherein at least one buffer chamber wall is the top reactor wall;
even more preferably wherein the pressure inside the buffer chamber is higher than the pressure in the reaction chamber and the gas in the buffer chamber is regularly or continuously purged such that HCl concentration in the buffer chamber is maintained below a predetermined level; and,
most preferably wherein the heat supplied to the reaction mixture of step (iv) originates from at least 3 electrical resistors, preferably at least 10 electrical resistors, more preferably at least 25 electrical resistors, most preferably at least 30 electrical resistors.

9. The method of claim 8, wherein the electrical resistors are grouped into at least 2 subgroups, preferably at least 3 subgroups, wherein the subgroups are non-overlapping and the furnace further comprises one or more controllers provided for independently controlling the power supply to each subgroup, and,
preferably wherein the power supply to a first electrical resistor in a first subgroup is different from the power supply to a second electrical resistor in a second subgroup.

10. The method of claim 9, wherein the power supply to a first electrical resistor in a first subgroup is different from the power supply to a second electrical resistor in a second subgroup, and preferably wherein the power supply to the first electrical resistor is larger than the power supply to the second electrical resistor, and wherein the number of other electrical resistors located in a sphere of radius R centered on the first electrical resistor is lower than the number of other electrical resistors located in a sphere of radius R centered on the second electrical resistor.

11. The method of claim 10, wherein the furnace comprises at least 10 electrical resistors, more preferably at least 25 electrical resistors, most preferably at least 30 electrical resistors, and wherein the first electrical resistor is closer to the center of the interior surface of the bottom reactor wall than the second electrical resistor,
preferably wherein at least part, more preferably all of the electrical resistors are arranged into 2 or more concentric circles, and wherein the first electrical resistor is part of a different concentric circle than the second electrical resistor.

12. The method of claim 11, wherein the reagents are provided near the center of the interior surface of the bottom reactor wall, for example within 0.3D of the center of the interior surface of the bottom reactor wall, wherein D is the largest dimension of the interior surface of the bottom reactor wall, and wherein the reaction mixture of step (iv) is gradually migrated from the center of the interior surface of the bottom reactor wall to the periphery of the interior surface of the bottom reactor wall, for example by rotating rabble arms, and wherein the power supply to the electrical resistors is controlled such that:
a) the temperature of the reaction mixture located on the interior surface of the bottom reactor wall is substantially constant throughout the reactor;
b) the temperature of the reaction mixture located on the interior surface of the bottom reactor wall increases from the center of the interior surface of the bottom reactor wall to the periphery of the interior surface of the bottom reactor wall, preferably increases by at least 50°C, more preferably increases by at least 100°C; or
c) the temperature of the reaction mixture located on the interior surface of the bottom reactor wall decreases from the center of the interior surface of the bottom reactor wall to the periphery of the interior surface of the bottom reactor wall, preferably decreases by at least 50°C, more preferably decreases by at least 100°C.

13. A method for the production of an alkali metal sulfate and/or an alkaline earth metal sulfate comprising the steps of:
(i) providing sulfuric acid;
(ii) providing an alkali metal chloride and/or an alkaline earth metal chloride, preferably an alkali metal chloride;
(iii) reacting the sulfuric acid of step (i) with the alkali metal chloride and/or alkaline earth metal chloride of step (ii) under conditions suitable for at least partially converting the sulfuric acid to alkali metal bisulfate and/or alkaline earth metal bisulfate;
(iv) reacting the alkali metal bisulfate and/or alkaline earth metal bisulfate of step (iii) under conditions suitable for at least partially converting the bisulfate to sulfate, said conditions comprising heating the reaction mixture;
wherein step (iv) is performed in a furnace according to any of claims 1-6;
wherein a major amount of the heat supplied to the reaction mixture of step (iv) originates from one or more electrical resistors which heat the reaction mixture and/or from one or more electrical resistors which heat one or more reactor walls.

14. The use of a furnace for the production of an alkali metal sulfate and/or an alkaline earth metal sulfate from sulfuric acid and an alkali metal chloride and/or an alkaline earth metal chloride, wherein the furnace has a first reaction chamber delimited by one or more reactor walls, each reactor wall having an interior surface facing the first reaction chamber, and an exterior surface opposite to the interior surface; wherein the furnace comprises one or more electrical resistors configured to heat the reaction mixture and/or comprises one or more electrical resistors configured to heat one or more reactor walls,
preferably wherein the one or more electrical resistors are configured to heat the reaction mixture and/or the exterior of one or more reactor walls by radiation,
more preferably wherein at least part, preferably all of the one or more electrical resistors are placed at a distance from all of the reactor walls such that there is no direct contact between the electrical resistor and the reactor walls, and,
most preferably wherein at least part, preferably all of the one or more electrical resistors are placed outside the reaction chamber and radiate the exterior surface of one or more reactor walls.

15. The use of a furnace according to any one of claims 1-6 for the production of an alkali metal sulfate and/or an alkaline earth metal sulfate from sulfuric acid and an alkali metal chloride and/or an alkaline earth metal chloride, and
preferably comprising heating the exterior of one or more reactor walls by radiation from the one or more electrical resistors.

## Patentansprüche

1. Ofen, der zur Herstellung eines Alkalimetallsulfats und/oder eines Erdalkalimetallsulfats aus Schwefelsäure und einem Alkalimetallchlorid und/oder einem Erdalkalimetallchlorid geeignet ist, wobei der Ofen eine erste Reaktionskammer umfasst, die durch eine untere Reaktorwand, eine der unteren Reaktorwand gegenüberliegende obere Reaktorwand und eine oder mehrere seitliche Reaktorwände begrenzt ist,
wobei der Ofen einen oder mehrere elektrische Widerstände umfasst, der/die in einer zweiten Pufferkammer neben der Reaktionskammer platziert ist/sind,
wobei die Pufferkammer ein geschlossener Raum ist, der durch eine oder mehrere Pufferkammerwände begrenzt ist,
wobei mindestens eine Pufferkammerwand eine Reaktorwand ist, bevorzugt die obere Reaktorwand,
wobei der eine oder die mehreren elektrischen Widerstände in einem Abstand von allen Reaktorwänden platziert ist/sind, so dass kein direkter Kontakt zwischen dem elektrischen Widerstand und den Reaktorwänden ist, und
wobei der eine oder die mehreren elektrischen Widerstände so platziert ist/sind, dass die elektrischen Widerstände die äußere Oberfläche einer oder mehrerer Reaktorwände durch Strahlung erhitzen können,
bevorzugt wobei der eine oder die mehreren elektrischen Widerstände in einem Abstand im Bereich von 1 bis 500 mm von der oberen Reaktorwand, mehr bevorzugt innerhalb des Bereichs von 15 bis 200 mm platziert ist/sind.

2. Ofen nach Anspruch 1, der mindestens 3 elektrische Widerstände, bevorzugt mindestens 10 elektrische Widerstände, mehr bevorzugt mindestens 25 elektrische Widerstände, am meisten bevorzugt mindestens 30 elektrische Widerstände umfasst.

3. Ofen nach Anspruch 2, wobei die elektrischen Widerstände in mindestens 2 Untergruppen, bevorzugt mindestens 3 Untergruppen, gruppiert sind, wobei die Untergruppen nicht überlappend sind und der Ofen ferner eine oder mehrere Steuerungen umfasst, die zur unabhängigen Steuerung der Stromversorgung jeder Untergruppe bereitgestellt ist/sind, und
bevorzugt, wobei die Steuerungen konfiguriert sind, um die Stromversorgung zu steuern, sodass die Stromversorgung eines ersten elektrischen Widerstands in einer ersten Untergruppe verschieden ist von der Stromversorgung eines zweiten elektrischen Widerstands in einer zweiten Untergruppe.

4. Ofen nach Anspruch 3, wobei die Steuerungen konfiguriert sind, um die Stromversorgung so zu steuern, dass die Stromversorgung zu einem ersten elektrischen Widerstand in einer ersten Untergruppe verschieden ist von der Stromversorgung zu einem zweiten elektrischen Widerstand in einer zweiten Untergruppe, und bevorzugt, wobei die Steuerungen konfiguriert sind, um die Stromversorgung so zu steuern, dass die Stromversorgung zum ersten elektrischen Widerstand größer ist als die Stromversorgung zum zweiten elektrischen Widerstand, und wobei die Anzahl anderer elektrischer Widerstände, die sich in einer Sphäre des Radius R, zentriert auf dem ersten elektrischen Widerstand, befinden, geringer ist als die Anzahl anderer elektrischer Widerstände, die sich in einer Sphäre des Radius R, zentriert auf dem zweiten elektrischen Widerstand, befinden.

5. Ofen nach Anspruch 4, wobei der Ofen mindestens 10 elektrische Widerstände umfasst, bevorzugt mindestens 25 elektrische Widerstände, mehr bevorzugt mindestens 30 elektrische Widerstände, wobei der erste elektrische Widerstand näher am Zentrum der inneren Oberfläche der unteren Reaktorwand ist, als der zweite elektrische Widerstand,
bevorzugt wobei mindestens Teile und mehr bevorzugt alle der elektrischen Widerstände in zwei oder mehr konzentrischen Kreisen angeordnet sind und wobei der erste elektrische Widerstand Teil eines anderen konzentrischen Kreises ist als der zweite elektrische Widerstand.

6. Ofen nach Anspruch 5, wobei die Reaktionskammer konfiguriert ist, um die Reagenzien nahe dem Zentrum der inneren Oberfläche der unteren Reaktorwand aufzunehmen, zum Beispiel innerhalb von 0,3D vom Zentrum der
inneren Oberfläche der unteren Reaktorwand, wobei D die größte Abmessung der inneren Oberfläche der unteren Reaktorwand ist, und wobei der Ofen konfiguriert ist, um das Reaktionsgemisch schrittweise vom Zentrum der inneren Oberfläche der unteren Reaktorwand zum Rand der inneren Oberfläche der unteren Reaktorwand zu migriert zum Beispiel durch rotieren von Rührarmen, und wobei die Steuerungen konfiguriert sind, um die Stromversorgung so zu steuern, dass während Betrieb:
die Temperatur des Reaktionsgemisches an der inneren Oberfläche der unteren Reaktorwand im gesamten Reaktor im Wesentlichen konstant ist;
die Temperatur des Reaktionsgemisches, das sich an der Innenfläche der unteren Reaktorwand befindet, von der Mitte der Innenfläche der unteren Reaktorwand zum Rand der Innenfläche der unteren Reaktorwand steigt, bevorzugt um mindestens 50 °C steigt, mehr bevorzugt um mindestens 100 °C steigt; oder
die Temperatur des Reaktionsgemisches, das sich an der inneren Oberfläche der unteren Reaktorwand befindet, vom Zentrum der inneren Oberfläche der unteren Reaktorwand zum Rand der inneren Oberfläche der unteren Reaktorwand sinkt, bevorzugt um mindestens 50 °C sinkt, mehr bevorzugt um mindestens 100 °C sinkt.

7. Verfahren zur Herstellung eines Alkalimetallsulfats und/oder eines Erdalkalimetallsulfats, umfassend die folgenden Schritte:
(i) Bereitstellen von Schwefelsäure;
(ii) Bereitstellen eines Alkalimetallchlorids und/oder eines Erdalkalimetallchlorids, bevorzugt eines Alkalimetallchlorids;
(iii) Umsetzen der Schwefelsäure aus Schritt (i) mit dem Alkalimetallchlorid und/oder Erdalkalimetallchlorid aus Schritt (ii) unter Bedingungen, die geeignet sind, die Schwefelsäure zumindest teilweise in Alkalimetallbisulfat und/oder Erdalkalimetallbisulfat umzuwandeln;
(iv) Umsetzen des Alkalimetallbisulfats und/oder Erdalkalimetallbisulfats aus Schritt (iii) unter Bedingungen, die geeignet sind, das Bisulfat zumindest teilweise in Sulfat umzuwandeln, wobei besagte Bedingungen Erhitzen des Reaktionsgemisches umfassen;
wobei Schritt (iv) in einem Ofen durchgeführt wird, der eine erste Reaktionskammer aufweist, die durch eine oder mehrere Reaktorwände begrenzt ist, wobei jede Reaktorwand eine innere Oberfläche, die der ersten Reaktionskammer zugewandt ist, und eine äußere Oberfläche gegenüber der inneren Oberfläche aufweist;
wobei ein Großteil der dem Reaktionsgemisch in Schritt (iv) zugeführten Hitze von einem oder mehreren elektrischen Widerständen stammt, die das Reaktionsgemisch erhitzen, und/oder von einem oder mehreren elektrischen Widerständen, die eine oder mehrere Reaktorwände erhitzen,
bevorzugt, wobei ein Großteil der dem Reaktionsgemisch in Schritt (iv)
zugeführten Hitze von einem oder mehreren elektrischen Widerständen stammt, die das Reaktionsgemisch bestrahlen, und/oder von einem oder mehreren elektrischen Widerständen, die die Außenseite einer oder mehrerer Reaktorwände bestrahlen;
mehr bevorzugt, wobei mindestens Teile, noch mehr bevorzugt alle der einen oder mehreren elektrischen Widerstände in einem Abstand von allen Reaktorwänden platziert sind, so dass kein direkter Kontakt zwischen dem elektrischen Widerstand und den Reaktorwänden ist; und
am meisten bevorzugt, wobei alle der einen oder mehreren elektrischen Widerstände außerhalb der Reaktionskammer platziert sind und die äußere Oberfläche einer oder mehrerer Reaktorwände bestrahlen.

8. Verfahren nach Anspruch 7, wobei die erste Reaktionskammer durch eine untere Reaktorwand, eine der unteren Reaktorwand gegenüberliegende obere Reaktorwand und eine oder mehrere seitliche Reaktorwände begrenzt ist und mindestens Teile, bevorzugt alle der einen oder mehreren elektrischen Widerstände in einem Abstand im Bereich von 0 bis 500 mm von der oberen Reaktorwand, bevorzugt im Bereich von 15 bis 200 mm, platziert sind;
mehr bevorzugt, wobei die elektrischen Widerstände, die außerhalb der Reaktionskammer platziert sind, sich in einer zweiten Pufferkammer befinden, die an die Reaktionskammer angrenzt, wobei die Pufferkammer ein geschlossener Raum ist, der durch eine oder mehrere Pufferkammerwände begrenzt ist, und wobei mindestens eine Pufferkammerwand die obere Reaktorwand ist;
noch mehr bevorzugt, wobei der Druck innerhalb der Pufferkammer höher ist als der Druck in der Reaktionskammer und das Gas in der Pufferkammer regelmäßig oder kontinuierlich gespült wird, so dass HCI-Konzentration in der Pufferkammer unter einem vorbestimmten Level gehalten wird; und
am meisten bevorzugt, wobei die Hitze, die dem Reaktionsgemisch von Schritt (iv) bereitgestellt wird, von mindestens 3 elektrischen Widerständen stammt, bevorzugt von mindestens 10 elektrischen Widerständen, mehr bevorzugt von mindestens 25 elektrischen Widerständen, am meisten bevorzugt von mindestens 30 elektrischen Widerständen.

9. Verfahren nach Anspruch 8, wobei die elektrischen Widerstände in mindestens 2 Untergruppen, bevorzugt mindestens 3 Untergruppen, gruppiert sind, wobei die Untergruppen nicht überlappend sind und der Ofen ferner eine oder mehrere Steuerungen umfasst, die zur unabhängigen Steuerung der Stromversorgung jeder Untergruppe bereitgestellt sind, und
bevorzugt wobei die Stromversorgung zu einem ersten elektrischen Widerstand in einer ersten Untergruppe verschieden ist von der Stromversorgung zu einem zweiten elektrischen Widerstand in einer zweiten Untergruppe.

10. Verfahren nach Anspruch 9, wobei die Stromversorgung zu einem ersten elektrischen Widerstand in einer ersten Untergruppe verschieden ist von der Stromversorgung zu einem zweiten elektrischen Widerstand in einer zweiten Untergruppe, und bevorzugt, wobei die Stromversorgung zum ersten elektrischen Widerstand größer ist als die Stromversorgung zum zweiten elektrischen Widerstand, und wobei die Anzahl anderer elektrischer Widerstände, die sich in einer Sphäre des Radius R, zentriert auf dem ersten elektrischen Widerstand, befinden, geringer ist als die Anzahl anderer elektrischer Widerstände, die sich in einer Sphäre des Radius R, zentriert auf dem zweiten elektrischen Widerstand, befinden.

11. Verfahren nach Anspruch 10, wobei der Ofen mindestens 10 elektrische Widerstände, mehr bevorzugt mindestens 25 elektrische Widerstände, am meisten bevorzugt mindestens 30 elektrische Widerstände umfasst, und wobei der erste elektrische Widerstand näher am Zentrum der inneren Oberfläche der unteren Reaktorwand ist als der zweite elektrische Widerstand,
bevorzugt, wobei mindestens Teile, mehr bevorzugt alle elektrischen Widerstände in zwei oder mehr konzentrischen Kreisen angeordnet sind und wobei der erste elektrische Widerstand Teil eines anderen konzentrischen Kreises ist als der zweite elektrische Widerstand.

12. Verfahren nach Anspruch 11, wobei die Reagenzien nahe dem Zentrum der inneren Oberfläche der unteren Reaktorwand bereitgestellt werden, zum Beispiel innerhalb von 0,3D vom Zentrum der inneren Oberfläche der unteren Reaktorwand, wobei D die größte Abmessung der inneren Oberfläche der unteren Reaktorwand ist, und wobei das Reaktionsgemisch schrittweise vom Zentrum der inneren Oberfläche der unteren Reaktorwand zum Rand der inneren Oberfläche der unteren Reaktorwand migriert, zum Beispiel durch rotieren von Rührarmen, und wobei die Steuerungen die Stromversorgung zum elektrischen Widerstand so gesteuert wird, dass:
a) die Temperatur des Reaktionsgemisches an der inneren Oberfläche der unteren Reaktorwand im gesamten Reaktor im Wesentlichen konstant ist;
b) die Temperatur des Reaktionsgemisches, das sich an der Innenfläche der unteren Reaktorwand befindet, von der Mitte der Innenfläche der unteren Reaktorwand zum Rand der Innenfläche der unteren Reaktorwand steigt, bevorzugt um mindestens 50 °C steigt, mehr bevorzugt um mindestens 100 °C steigt; oder
c) die Temperatur des Reaktionsgemisches, das sich an der inneren Oberfläche der unteren Reaktorwand befindet, vom Zentrum der inneren Oberfläche der unteren Reaktorwand zum Rand der inneren Oberfläche der unteren Reaktorwand sinkt, bevorzugt um mindestens 50 °C sinkt, mehr bevorzugt um mindestens 100 °C sinkt.

13. Verfahren zur Herstellung eines Alkalimetallsulfats und/oder eines Erdalkalimetallsulfats, umfassend die Schritte:
(i) Bereitstellen von Schwefelsäure;
(ii) Bereitstellen eines Alkalimetallchlorids und/oder eines Erdalkalimetallchlorids, bevorzugt eines Alkalimetallchlorids;
(iii) Umsetzen der Schwefelsäure aus Schritt (i) mit dem Alkalimetallchlorid und/oder Erdalkalimetallchlorid aus Schritt (ii) unter Bedingungen, die geeignet sind, die Schwefelsäure zumindest teilweise in Alkalimetallbisulfat und/oder Erdalkalimetallbisulfat umzuwandeln;
(iv) Umsetzen des Alkalimetallbisulfats und/oder Erdalkalimetallbisulfats aus Schritt (iii) unter Bedingungen, die geeignet sind, das Bisulfat zumindest teilweise in Sulfat umzuwandeln, wobei besagte Bedingungen Erhitzen des Reaktionsgemisches umfassen;
wobei Schritt (iv) in einem Ofen nach einem der Ansprüche 1-6 durchgeführt wird,
wobei ein Großteil der dem Reaktionsgemisch in Schritt (iv) zugeführten Hitze von einem oder mehreren elektrischen Widerständen stammt, die das Reaktionsgemisch erhitzen, und/oder von einem oder mehreren elektrischen Widerständen, die eine oder mehrere Reaktorwände erhitzen,

14. Verwendung eines Ofens zur Herstellung eines Alkalimetallsulfats und/oder eines Erdalkalimetallsulfats aus Schwefelsäure und einem Alkalimetallchlorid und/oder einem Erdalkalimetallchlorid, wobei der Ofen eine erste Reaktionskammer aufweist, die durch eine oder mehrere Reaktorwände begrenzt ist, wobei jede Reaktorwand eine der ersten Reaktionskammer zugewandte innere Oberfläche und eine der inneren Oberfläche gegenüberliegende äußere Oberfläche aufweist; wobei der Ofen einen oder mehrere elektrische Widerstände umfasst, die konfiguriert sind, um das Reaktionsgemisch zu erhitzen , und/oder einen oder mehrere elektrische Widerstände umfasst, die konfiguriert sind, um eine oder mehrere Reaktorwände zu erhitzen,
bevorzugt, wobei der eine oder die mehreren elektrischen Widerstände konfiguriert sind, um das Reaktionsgemisch und/oder die Außenseite einer oder mehrerer Reaktorwände durch Strahlung zu erhitzen,
mehr bevorzugt, wobei mindestens Teile, bevorzugt alle der einen oder mehreren elektrischen Widerstände in einem Abstand von allen Reaktorwänden angeordnet sind, so dass kein direkter Kontakt zwischen dem elektrischen Widerstand und den Reaktorwänden ist, und
am meisten bevorzugt, wobei mindestens Teile, bevorzugt alle der einen oder mehreren elektrischen Widerstände außerhalb der Reaktionskammer platziert sind und die äußere Oberfläche einer oder mehrerer Reaktorwände bestrahlen.

15. Verwendung eines Ofens nach einem der Ansprüche 1 bis 6 zur Herstellung eines Alkalimetallsulfats und/oder eines Erdalkalimetallsulfats aus Schwefelsäure und einem Alkalimetallchlorid und/oder einem Erdalkalimetallchlorid, und
bevorzugt Erhitzen der Außenseite einer oder mehrerer Reaktorwände durch Strahlung von dem einen oder mehreren elektrischen Widerständen umfasst.

## Revendications

1. Four approprié pour la production d'un sulfate de métal alcalin et/ou d'un sulfate de métal alcalino-terreux à partir d'acide sulfurique et d'un chlorure de métal alcalin et/ou d'un chlorure de métal alcalino-terreux, le four comprenant une première chambre de réaction délimitée par une paroi inférieure de réacteur, une paroi supérieure de réacteur opposée à la paroi inférieure de réacteur et une ou plusieurs parois latérales de réacteur,
où le four comprend une ou plusieurs résistances électriques placées dans une deuxième chambre tampon adjacente à la chambre de réaction,
où la chambre tampon est un espace fermé délimité par une ou plusieurs parois de chambre tampon, où au moins une paroi de chambre tampon est une paroi de réacteur, de préférence la paroi supérieure de réacteur,
où l'une ou plusieurs résistances électriques sont placées à une distance de la totalité des parois de réacteur de telle sorte qu'il n'y ait pas de contact direct entre la résistance électrique et les parois de réacteur, et
où l'une ou plusieurs résistances électriques sont placées de telle sorte que les résistances électriques puissent chauffer la surface extérieure d'une ou plusieurs parois de réacteur par rayonnement,
de préférence, où l'une ou plusieurs résistances électriques sont placées à une distance comprise dans la plage de 1 à 500 mm de la paroi supérieure de réacteur, plus préférablement comprise dans la plage de 15 à 200 mm.

2. Four selon la revendication 1, comprenant au moins 3 résistances électriques, de préférence au moins 10 résistances électriques, plus préférablement au moins 25 résistances électriques, le plus préférablement au moins 30 résistances électriques.

3. Four selon la revendication 2, où les résistances électriques sont regroupées en au moins deux sous-groupes, de préférence en au moins trois sous-groupes, où les sous-groupes ne se chevauchent pas et le four comprend en outre un ou plusieurs contrôleurs prévus pour contrôler indépendamment l'alimentation électrique de chaque sous-groupe, et,
de préférence, où les contrôleurs sont configurés pour contrôler l'alimentation électrique de telle sorte que l'alimentation électrique d'une première résistance électrique dans un premier sous-groupe soit différente de l'alimentation électrique d'une deuxième résistance électrique dans un deuxième sous-groupe.

4. Four selon la revendication 3, où les contrôleurs sont configurés pour contrôler l'alimentation électrique de telle sorte que l'alimentation électrique d'une première résistance électrique dans un premier sous-groupe soit différente de l'alimentation électrique d'une deuxième résistance électrique dans un deuxième sous-groupe, et de préférence où les contrôleurs sont configurés pour contrôler l'alimentation électrique de telle sorte que l'alimentation électrique de la première résistance électrique soit supérieure à l'alimentation électrique de la deuxième résistance électrique, et où le nombre d'autres résistances électriques situées dans une sphère de rayon R centrée sur la première résistance électrique est inférieur au nombre d'autres résistances électriques situées dans une sphère de rayon R centrée sur la deuxième résistance électrique,

5. Four selon la revendication 4, où le four comprend au moins 10 résistances électriques, de préférence au moins 25 résistances électriques, plus préférablement au moins 30 résistances électriques, où la première résistance électrique est plus proche du centre de la surface intérieure de la paroi inférieure de réacteur que la deuxième résistance électrique,
de préférence, où au moins une partie, et plus préférablement toutes les résistances électriques sont disposées en deux ou plusieurs cercles concentriques, et où la première résistance électrique fait partie d'un cercle concentrique différent de celui de la deuxième résistance électrique.

6. Four selon la revendication 5, où la chambre de réaction est configurée pour recevoir les réactifs près du centre de la surface intérieure de la paroi inférieure de réacteur, par exemple à un maximum de 0,3D du centre de la surface intérieure de la paroi inférieure de réacteur, où D est la dimension la plus grande de la surface intérieure de la paroi inférieure de réacteur, et où le four est configuré pour faire migrer progressivement le mélange réactionnel du centre de la surface intérieure de la paroi inférieure de réacteur vers la périphérie de la surface intérieure de la paroi inférieure de réacteur, par exemple en faisant tourner des râteaux, et où les contrôleurs sont configurés pour contrôler l'alimentation électrique de telle sorte que pendant le fonctionnement :
la température du mélange réactionnel situé sur la surface intérieure de la paroi inférieure de réacteur soit sensiblement constante dans tout le réacteur ;
la température du mélange réactionnel situé sur la surface intérieure de la paroi inférieure de réacteur augmente du centre de la surface intérieure de la paroi inférieure de réacteur vers la périphérie de la surface intérieure de la paroi inférieure de réacteur, de préférence augmente d'au moins 50 °C, plus préférablement augmente d'au moins 100 °C ; ou
la température du mélange réactionnel situé sur la surface intérieure de la paroi inférieure de réacteur diminue du centre de la surface intérieure de la paroi inférieure de réacteur vers la périphérie de la surface intérieure de la paroi inférieure de réacteur, de préférence diminue d'au moins 50 °C, plus préférablement d'au moins 100 °C.

7. Méthode de production d'un sulfate de métal alcalin et/ou d'un sulfate de métal alcalino-terreux comprenant les étapes suivantes :
(i) fournir de l'acide sulfurique ;
(ii) fournir un chlorure de métal alcalin et/ou un chlorure de métal alcalino-terreux, de préférence un chlorure de métal alcalin ;
(iii) faire réagir l'acide sulfurique de l'étape (i) avec le chlorure de métal alcalin et/ou le chlorure de métal alcalino-terreux de l'étape (ii) dans des conditions appropriées pour convertir au moins partiellement l'acide sulfurique en bisulfate de métal alcalin et/ou bisulfate de métal alcalino-terreux ;
(iv) faire réagir le bisulfate de métal alcalin et/ou le bisulfate de métal alcalino-terreux de l'étape (iii) dans des conditions appropriées pour convertir au moins partiellement le bisulfate en sulfate, lesdites conditions comprenant le chauffage du mélange réactionnel ;
où l'étape (iv) est effectuée dans un four ayant une première chambre de réaction délimitée par une ou plusieurs parois de réacteur, chaque paroi de réacteur ayant une surface intérieure faisant face à la première chambre de réaction et une surface extérieure opposée à la surface intérieure ;
où une grande partie de la chaleur fournie au mélange réactionnel de l'étape (iv) provient d'une ou plusieurs résistances électriques qui chauffent le mélange réactionnel et/ou d'une ou plusieurs résistances électriques qui chauffent une ou plusieurs parois de réacteur,
de préférence, où une grande partie de la chaleur fournie au mélange réactionnel de l'étape (iv) provient d'une ou plusieurs résistances électriques qui irradient le mélange réactionnel et/ou d'une ou plusieurs résistances électriques qui irradient l'extérieur d'une ou plusieurs parois de réacteur ;
plus préférablement, où au moins une partie, encore plus préférablement la totalité d'une ou plusieurs résistances électriques sont placées à distance de la totalité des parois de réacteur de telle sorte à ce qu'il n'y ait pas de contact direct entre la résistance électrique et les parois de réacteur ; et,
le plus préférablement, la totalité d'une ou plusieurs résistances électriques sont placées à l'extérieur de la chambre de réaction et irradient la surface extérieure d'une ou plusieurs parois de réacteur.

8. Méthode selon la revendication 7, où la première chambre de réaction est délimitée par une paroi inférieure de réacteur, une paroi supérieure de réacteur opposée à la paroi inférieure de réacteur et une ou plusieurs parois latérales de réacteur, et au moins une partie, de préférence la totalité d'une ou plusieurs résistances électriques sont placées à une distance comprise dans la plage de 1 à 500 mm à partir de la paroi supérieure de réacteur, de préférence comprise dans la plage de 15 à 200 mm ;
plus préférablement, où les résistances électriques placées à l'extérieur de la chambre de réaction sont situées dans une deuxième chambre tampon adjacente à la chambre de réaction, où la chambre tampon est un espace fermé délimité par une ou plusieurs parois de chambre tampon et où au moins une paroi de chambre tampon est la paroi supérieure de réacteur ;
encore plus préférablement, où la pression à l'intérieur de la chambre tampon est supérieure à la pression dans la chambre de réaction et le gaz dans la chambre tampon est purgé régulièrement ou en continu de telle sorte que la concentration en HCl dans la chambre tampon soit maintenue en dessous d'un niveau prédéterminé ; et,
le plus préférablement, où la chaleur fournie au mélange réactionnel de l'étape (iv) provient d'au moins 3 résistances électriques, de préférence d'au moins 10 résistances électriques, plus préférablement d'au moins 25 résistances électriques, le plus préférablement d'au moins 30 résistances électriques.

9. Méthode selon la revendication 8, où les résistances électriques sont regroupées en au moins 2 sous-groupes, de préférence en au moins 3 sous-groupes, où les sous-groupes ne se chevauchent pas et le four comprend en outre un ou plusieurs contrôleurs prévus pour contrôler indépendamment l'alimentation électrique de chaque sous-groupe, et,
de préférence, où l'alimentation électrique d'une première résistance électrique dans un premier sous-groupe est différente de l'alimentation électrique d'une deuxième résistance électrique dans un deuxième sous-groupe.

10. Méthode selon la revendication 9, où l'alimentation électrique d'une première résistance électrique dans un premier sous-groupe est différente de l'alimentation électrique d'une deuxième résistance électrique dans un deuxième sous-groupe, et de préférence où l'alimentation électrique de la première résistance électrique est supérieure à l'alimentation électrique de la deuxième résistance électrique, et où le nombre d'autres résistances électriques situées dans une sphère de rayon R centrée sur la première résistance électrique est inférieur au nombre d'autres résistances électriques situées dans une sphère de rayon R centrée sur la deuxième résistance électrique.

11. Méthode selon la revendication 10, où le four comprend au moins 10 résistances électriques, plus préférablement au moins 25 résistances électriques, le plus préférablement au moins 30 résistances électriques, et où la première résistance électrique est plus proche du centre de la surface intérieure de la paroi inférieure de réacteur que la deuxième résistance électrique,
de préférence, où au moins une partie, plus préférablement la totalité des résistances électriques sont disposées en deux ou plusieurs cercles concentriques, et où la première résistance électrique fait partie d'un cercle concentrique différent de celui de la deuxième résistance électrique.

12. Méthode selon la revendication 11, où les réactifs sont fournis près du centre de la surface intérieure de la paroi inférieure de réacteur, par exemple à un maximum de 0,3D du centre de la surface intérieure de la paroi inférieure de réacteur, où D est la dimension la plus grande de la surface intérieure de la paroi inférieure de réacteur, et où le mélange réactionnel de l'étape (iv) migre progressivement du centre de la surface intérieure de la paroi inférieure de réacteur vers la périphérie de la surface intérieure de la paroi inférieure de réacteur, par exemple en faisant tourner des râteaux, et où l'alimentation électrique des résistances électriques est contrôlée de telle sorte que :
a) la température du mélange réactionnel situé sur la surface intérieure de la paroi inférieure de réacteur est sensiblement constante dans tout le réacteur ;
b) la température du mélange réactionnel situé sur la surface intérieure de la paroi inférieure de réacteur augmente du centre de la surface intérieure de la paroi inférieure de réacteur vers la périphérie de la surface intérieure de la paroi inférieure de réacteur, de préférence augmente d'au moins 50 °C, plus préférablement augmente d'au moins 100 °C ; ou
c) la température du mélange réactionnel situé sur la surface intérieure de la paroi inférieure de réacteur diminue du centre de la surface intérieure de la paroi inférieure de réacteur vers la périphérie de la surface intérieure de la paroi inférieure de réacteur, de préférence diminue d'au moins 50 °C, plus préférablement diminue d'au moins 100 °C.

13. Méthode de production d'un sulfate de métal alcalin et/ou d'un sulfate de métal alcalino-terreux comprenant les étapes suivantes :
(i) fournir de l'acide sulfurique ;
(ii) fournir un chlorure de métal alcalin et/ou un chlorure de métal alcalino-terreux, de préférence un chlorure de métal alcalin ;
(iii) faire réagir l'acide sulfurique de l'étape (i) avec le chlorure de métal alcalin et/ou le chlorure de métal alcalino-terreux de l'étape (ii) dans des conditions appropriées pour convertir au moins partiellement l'acide sulfurique en bisulfate de métal alcalin et/ou bisulfate de métal alcalino-terreux ;
(iv) faire réagir le bisulfate de métal alcalin et/ou le bisulfate de métal alcalino-terreux de l'étape (iii) dans des conditions appropriées pour convertir au moins partiellement le bisulfate en sulfate, lesdites conditions comprenant le chauffage du mélange réactionnel ;
où l'étape (iv) est effectuée dans un four selon l'une quelconque des revendications 1 à 6 ;
où une grande partie de la chaleur fournie au mélange réactionnel de l'étape (iv) provient d'une ou plusieurs résistances électriques qui chauffent le mélange réactionnel et/ou d'une ou plusieurs résistances électriques qui chauffent une ou plusieurs parois de réacteur.

14. Utilisation d'un four pour la production d'un sulfate de métal alcalin et/ou d'un sulfate de métal alcalino-terreux à partir d'acide sulfurique et d'un chlorure de métal alcalin et/ou d'un chlorure de métal alcalino-terreux, où le four a une première chambre de réaction délimitée par une ou plusieurs parois de réacteur, chaque paroi de réacteur ayant une surface intérieure faisant face à la première chambre de réaction, et une surface extérieure opposée à la surface intérieure ; où le four comprend une ou plusieurs résistances électriques configurées pour chauffer le mélange réactionnel et/ou comprend une ou plusieurs résistances électriques configurées pour chauffer une ou plusieurs parois de réacteur,
de préférence, où l'une ou plusieurs résistances électriques sont configurées pour chauffer le mélange réactionnel et/ou l'extérieur d'une ou plusieurs parois de réacteur par rayonnement,
plus préférablement, où au moins une partie, de préférence la totalité d'une ou plusieurs résistances électriques sont placées à une distance de la totalité des parois de réacteur de telle sorte qu'il n'y ait pas de contact direct entre la résistance électrique et les parois de réacteur, et,
le plus préférablement, où au moins une partie, de préférence la totalité, d'une ou plusieurs résistances électriques sont placées à l'extérieur de la chambre de réaction et irradient la surface extérieure d'une ou plusieurs parois de réacteur.

15. Utilisation d'un four selon l'une quelconque des revendications 1 à 6 pour la production d'un sulfate de métal alcalin et/ou d'un sulfate de métal alcalino-terreux à partir d'acide sulfurique et d'un chlorure de métal alcalin et/ou d'un chlorure de métal alcalino-terreux, et
de préférence , comprenant le chauffage de l'extérieur d'une ou plusieurs parois de réacteur par rayonnement provenant d'une ou plusieurs résistances électriques.
